# EUROPEAN PATENT APPLICATION

(11) **EP 4 742 018 A1**
(43) Date of publication of application: **13.05.2026**
(21) Application number: 25777511.4
(22) Date of filing: 25.03.2025
(51) Int. Cl.: G06F 3/04817, G06F 3/0481

(54) **FOLDER INTERACTION METHOD AND RELATED APPARATUS**

(30) Priority: 28.03.2024 CN 202410384707
(71) Applicant: Huawei Technologies Co., Ltd., Shenzhen, Guangdong 518129 (CN)
(72) Inventor: CHEN, Fengting, Shenzhen, Guangdong 518129 (CN)
(74) Representative: Gill Jennings & Every LLP
(86) International application number: PCT/CN2025/084816
(87) International publication number: WO 2025/201354

(57) **Abstract**

Embodiments of this application provide a folder interaction method and a related apparatus. According to the method, a user can directly long press an icon of a target application in a large folder to invoke a corresponding application shortcut menu, without expanding the large folder. In addition, the user may also directly long press the icon of the target application in the large folder to move a position of the icon of the target application in the large folder or drag the icon of the target application out of the large folder, without expanding the large folder. In addition, the user may also directly swipe up at the icon of the target application in the large folder to invoke a corresponding service widget, without expanding the large folder. In this way, user operations are simpler and faster, thereby enhancing user experience.

## Description

This application claims priority to Chinese Patent Application No. 202410384707.0, filed with the China National Intellectual Property Administration on March 28, 2024 and entitled "FOLDER INTERACTION METHOD AND RELATED APPARATUS", which is incorporated herein by reference in its entirety.

### TECHNICAL FIELD

This application relates to the field of terminals and terminal technologies, and in particular, to a folder interaction method and a related apparatus.

### BACKGROUND

Currently, application icons may be displayed on a desktop of an electronic device like a mobile phone or a tablet of a user. To implement classified management of different types of application icons, a folder is provided on the desktop of the electronic device. One or more application icons may be placed in the folder. For a large folder, the user may directly tap an application icon in the large folder to start a corresponding application. Currently, if the user wants to use an application shortcut menu corresponding to the application icon in the large folder or move a position of the application icon, the user needs to first expand the large folder, then locate the corresponding application icon, and perform a related operation to invoke the application shortcut menu or move the position of the application icon. This makes user operations cumbersome and affects user experience.

### SUMMARY

This application provides a folder interaction method and a related apparatus. According to the method, a user can directly perform an operation on an application icon in a large folder without expanding the large folder, for example, long pressing the application icon to invoke an application shortcut menu, or long pressing and moving the application icon. In this way, user operations can be simplified, thereby improving user experience.

According to a first aspect, this application provides a folder interaction method. The method may include: An electronic device displays a desktop. The desktop includes a large folder, the large folder includes an icon of a first application and an icon of a second application, the desktop further includes an icon of a third application, and the large folder does not include the icon of the third application. The electronic device receives a first operation performed by a user on the desktop. In response to the first operation, the electronic device moves the icon of the first application from a first position to a second position.

In this way, the user may directly move a position of the first application in the large folder, without expanding the large folder on the desktop. The user does not need to first expand the large folder and then move a position of an application icon, which simplifies user operations, thereby improving user experience.

With reference to the first aspect, in a possible implementation, the first position and the second position are positions in the large folder, and the first position and the second position are different. Alternatively, the first position is a position in the large folder, and the second position is outside the large folder and is a position on the desktop. After the icon of the first application is moved from the first position to the second position, the icon of the first application is no longer displayed in the large folder.

With reference to the first aspect, in a possible implementation, the first operation is an operation of long pressing the icon of the first application and moving the icon of the first application in the large folder; or the first operation is an operation of long pressing the icon of the first application and moving the icon of the first application out of the large folder.

In this way, the user may adjust a position of the icon of the first application in the large folder or move the icon of the first application out of the large folder, without expanding the large folder on the desktop. The user does not need to first expand the large folder and then adjust the position of the icon of the first application in the large folder, and the user does not need to first expand the large folder and then move the icon of the first application out of the large folder. In this way, user operations can be simplified, thereby improving user experience.

With reference to the first aspect, in a possible implementation, when the large folder includes only the icon of the first application and the icon of the second application, the second position is outside the large folder and is the position on the desktop, and after the electronic device moves the icon of the first application from the first position to the second position, the method may further include: The electronic device no longer displays the large folder, and displays the icon of the second application at a third position on the desktop.

In this way, when there are only two application icons in the large folder, the user may move out one application icon without expanding the large folder, so that the electronic device no longer displays the large folder. The user does not need to first expand the large folder and then remove an application, so that the electronic device no longer displays the large folder. In this way, user operations can be simplified, thereby improving user experience.

With reference to the first aspect, in a possible implementation, the large folder further includes an icon of a fourth application, and the method may further include: When the electronic device displays the desktop, the electronic device detects a second operation performed by the user on the desktop; and in response to the second operation, the electronic device displays a shortcut menu of the second application. The shortcut menu of the second application includes one or more function options provided by the second application.

The second operation is an operation of long pressing the icon of the second application.

In this way, the user may directly long press the icon of the second application in the large folder without expanding the large folder on the desktop, to invoke the shortcut menu of the second application. The user does not need to first expand the large folder and then long press the icon of the second application in the large folder. In this way, user operations can be simplified, thereby improving user experience.

With reference to the first aspect, in a possible implementation, after the electronic device detects the second operation performed by the user on the desktop, the method may further include: In response to the second operation, the electronic device further displays a shortcut menu of the large folder. The shortcut menu of the large folder includes one or more function options for the large folder.

In this way, the user may directly long press the icon of the second application in the large folder without expanding the large folder on the desktop, so that not only the shortcut menu of the second application can be invoked, but also the shortcut menu of the large folder can be invoked.

With reference to the first aspect, in a possible implementation, the method may further include: When the electronic device displays the desktop, the electronic device detects a third operation performed by the user on the desktop; and the electronic device displays a service widget of the fourth application in response to the third operation.

The third operation is an operation of long pressing the icon of the fourth application and swiping up.

In this way, the user may directly perform a swiping-up operation on the fourth application in the large folder without expanding the large folder on the desktop, to invoke the service widget of the fourth application. The user does not need to first expand the large folder and then perform a swiping-up operation on the fourth application in the large folder, which simplifies user operations, thereby improving user experience.

With reference to the first aspect, in a possible implementation, that the electronic device displays the service widget of the fourth application specifically includes: The electronic device displays the service widget of the fourth application above the large folder in an overlay manner. In this way, the service widget may not occupy another position on the desktop and does not disturb an original layout of the desktop due to display of the service widget.

With reference to the first aspect, in a possible implementation, before the electronic device displays the large folder on the desktop, the method may further include: The electronic device displays a small folder. The small folder includes the icon of the first application and the icon of the second application. The electronic device receives a fourth operation of displaying the small folder as a large folder by the user; and in response to the fourth operation, the electronic device displays the large folder. The large folder includes the icon of the first application and the icon of the second application, a size of the icon of the first application in the large folder is greater than a size of the icon of the first application in the small folder, and a size of the icon of the second application in the large folder is greater than a size of the icon of the second application in the small folder. In this way, the large folder may be generated based on a user operation.

With reference to the first aspect, in a possible implementation, after the electronic device displays the large folder on the desktop, the method may further include: The electronic device detects a fifth operation performed by the user on the desktop; and the electronic device displays the icon of the third application in the large folder in response to the fifth operation.

The fifth operation is an operation of long pressing the icon of the third application and dragging the icon of the third application into the large folder.

In this way, the user directly drags the icon of the third application into the large folder without expanding the large folder on the desktop. In addition, the user does not need to first expand the large folder and then drag an application icon into the large folder, which simplifies user operations, thereby improving user experience.

According to a second aspect, an electronic device is provided. The electronic device may include a display, one or more processors, and one or more memories. The display and the one or more memories are coupled to the one or more processors. The one or more memories are configured to store computer program code, and the computer program code includes computer instructions. When the one or more processors execute the computer instructions, the electronic device is enabled to perform the method according to any possible implementation of the first aspect.

According to a third aspect, an electronic device is provided. The electronic device may include one or more functional modules, and the one or more functional modules are configured to implement the method according to any possible implementation of the first aspect.

According to a fourth aspect, a chip system is provided. The chip system is used in an electronic device, and the chip system includes one or more processors. The processor is configured to invoke computer instructions, so that the electronic device is enabled to perform the method according to any possible implementation of the first aspect.

According to a fifth aspect, a computer-readable storage medium is provided, and includes instructions. When the instructions are run on an electronic device, the electronic device is enabled to perform the method according to any possible implementation of the first aspect.

According to a sixth aspect, a computer program product is provided. The computer program product includes a computer program/instructions. When the computer program/the instructions are run on an electronic device, the electronic device is enabled to perform the method in any possible implementation of the first aspect.

### BRIEF DESCRIPTION OF DRAWINGS

FIG. 1 is a diagram of a structure of an electronic device according to an embodiment of this application;
FIG. 2 is a diagram of a software framework of an electronic device according to an embodiment of this application;
FIG. 3 is a diagram of a user interface of an electronic device according to an embodiment of this application;
FIG. 4 is a diagram of a user interface of an electronic device according to an embodiment of this application;
FIG. 5 is a diagram of a user interface of an electronic device according to an embodiment of this application;
FIG. 6 is a diagram of a user interface of an electronic device according to an embodiment of this application;
FIG. 7 is a diagram of a user interface of an electronic device according to an embodiment of this application;
FIG. 8 is a diagram of a user interface of an electronic device according to an embodiment of this application;
FIG. 9 is a diagram of a user interface of an electronic device according to an embodiment of this application;
FIG. 10 is a diagram of a user interface of an electronic device according to an embodiment of this application;
FIG. 11 is a diagram of a user interface of an electronic device according to an embodiment of this application;
FIG. 12 is a diagram of a user interface of an electronic device according to an embodiment of this application;
FIG. 13 is a diagram of a user interface of an electronic device according to an embodiment of this application;
FIG. 14 is a diagram of a user interface of an electronic device according to an embodiment of this application;
FIG. 15 is a diagram of a user interface of an electronic device according to an embodiment of this application;
FIG. 16 is a diagram of a user interface of an electronic device according to an embodiment of this application;
FIG. 17 is a diagram of a user interface of an electronic device according to an embodiment of this application;
FIG. 18 is a diagram of a user interface of an electronic device according to an embodiment of this application;
FIG. 19 is a diagram of a user interface of an electronic device according to an embodiment of this application;
FIG. 20 is a diagram of a user interface of an electronic device according to an embodiment of this application;
FIG. 21 is a diagram of a user interface of an electronic device according to an embodiment of this application;
FIG. 22 is a diagram of a user interface of an electronic device according to an embodiment of this application;
FIG. 23A and FIG. 23B are a flowchart of a folder interaction method according to an embodiment of this application;
FIG. 24 is a diagram of a user interface of an electronic device according to an embodiment of this application;
FIG. 25 is a diagram of a user interface of an electronic device according to an embodiment of this application;
FIG. 26 is a diagram of a user interface of an electronic device according to an embodiment of this application;
FIG. 27 is a diagram of a user interface of an electronic device according to an embodiment of this application;
FIG. 28 is a diagram of a user interface of an electronic device according to an embodiment of this application; and
FIG. 29 is a diagram of a user interface of an electronic device according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by persons of ordinary skill in the art based on embodiments of this application without creative efforts shall fall within the protection scope of this application.

Terms used in the following embodiments of this application are merely intended to describe specific embodiments, but are not intended to limit this application. The terms "one", "a", "an", "the", and "this" of singular forms used in this specification and the appended claims of this application are also intended to include plural forms, unless otherwise specified in the context clearly. The terms "first" and "second" are merely intended for a purpose of description, and shall not be understood as an indication or implication of relative importance or an implicit indication of a quantity of indicated technical features. Therefore, a feature defined by "first" or "second" may explicitly or implicitly include one or more features. Terms "first", "second", and the like are intended to distinguish between different objects rather than describe a specific sequence of the objects. For example, a first object and a second object are used to distinguish between different objects, but are not used to describe a specific sequence of the objects.

In the descriptions of embodiments of this application, unless otherwise specified, "a plurality of" means two or more. For example, a plurality of processing units are two or more processing units, and a plurality of systems are two or more systems.

In embodiments of this application, the word such as "example" or "for example" is used to represent giving an example, an illustration, or a description. Any embodiment or design described as an "example" or "for example" in embodiments of this application should not be construed as being more preferred or having more advantages than another embodiment or design. To be precise, the terms such as "example" or "for example" are intended to present a related concept in a specific manner.

In this application, the term "and/or" describes only an association relationship for describing associated objects and represents that three relationships may exist. For example, A and/or B may indicate the following three cases: Only A exists, both A and B exist, and only B exists.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a widget that is displayed on a display of the electronic device.

To better understand the technical solutions provided in this application, before the technical solutions in this application are described, an electronic device 100 that has a display and that is applicable to this application is first described with reference to the accompanying drawings. The electronic device 100 may display a desktop on the display. In this embodiment of this application, the electronic device 100 may include but is not limited to a device having a display, such as a mobile phone, a tablet computer, a smartwatch, or a foldable device. A specific form and type of the electronic device 100 are not limited in this embodiment of this application.

The following first describes an example electronic device 100 provided in this embodiment of this application.

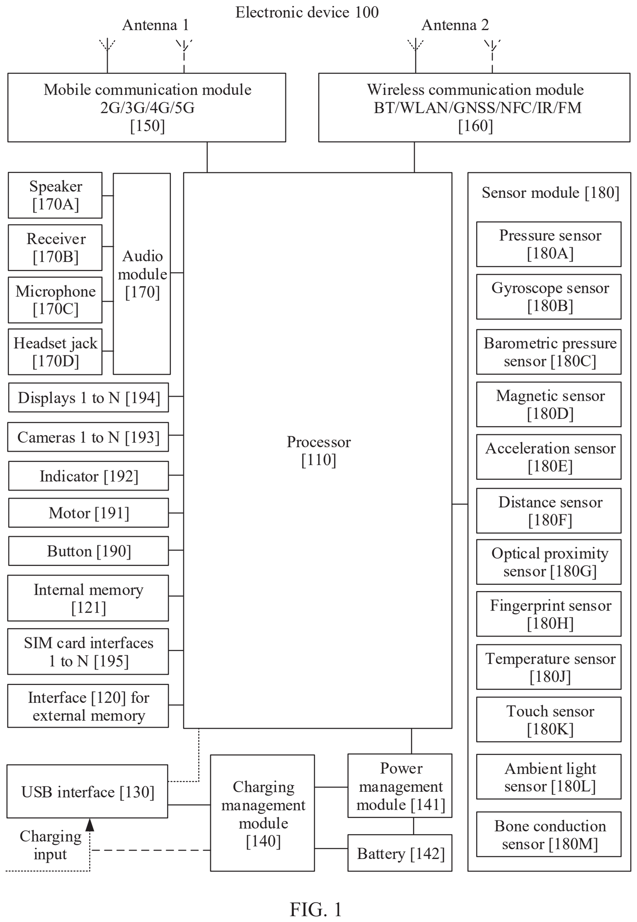

FIG. 1 is a diagram of a structure of the electronic device 100 according to an embodiment of this application.

The electronic device 100 is used below as an example to describe embodiments in detail. It should be understood that the electronic device 100 may have more or fewer components than those shown in the figure, or may combine two or more components, or may have different component configurations. Various components shown in the figure may be implemented by using hardware including one or more signal processing and/or application-specific integrated circuits, software, or a combination of hardware and software.

The electronic device 100 may include: a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 through the DSI interface, to implement a display function of the electronic device 100.

The GPIO interface may be configured using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The SIM interface may be configured to communicate with the SIM card interface 195, to implement a function of transmitting data to a SIM card or reading data in a SIM card.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger.

The power management module 141 is configured to connect to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, or the receiver 170B), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation for graphic rendering. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and color of the image. The ISP may further optimize parameters such as exposure and a color temperature of a photographing scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and quickly processes input information with reference to a structure of a biological neural network, for example, a transfer mode between human brain neurons, and may further continuously perform self learning. Applications such as intelligent cognition of the electronic device 100 may be implemented through the NPU, for example, image recognition, facial recognition, speech recognition, and text understanding.

The interface 120 for external memory may be configured to connect to an external memory card, for example, a micro SD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system and an application required by at least one function (for example, a facial recognition function, a fingerprint recognition function, and a mobile payment function). The data storage area may store data (such as facial information template data and a fingerprint information template) created during use of the electronic device 100. In addition, the internal memory 121 may include a high-speed random access memory, or may include a non-volatile memory, for example, at least one magnetic disk storage device, a flash memory, or a universal flash storage (universal flash storage, UFS).

The electronic device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received on the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to implement a noise reduction function, in addition to collecting a sound signal. In some other embodiments, three, four, or more microphones 170C may alternatively be disposed in the electronic device 100, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines a pressure strength based on the change in the capacitance. When a touch operation is performed on the display 194, the electronic device 100 detects a strength of the touch operation by using the pressure sensor 180A. The electronic device 100 may also calculate a touch position based on a detection signal of the pressure sensor 180A. In some embodiments, touch operations that are performed in a same touch position but have different touch operation strengths may correspond to different operation instructions. For example, when a touch operation with a touch operation strength less than a first pressure threshold is performed on a Messages application icon, an instruction for viewing an SMS message is executed. When a touch operation with a touch operation strength greater than or equal to the first pressure threshold is performed on the Messages application icon, an instruction for creating a new SMS message is executed.

The gyroscope sensor 180B may be configured to determine a motion gesture of the electronic device 100. In some embodiments, angular velocities of the electronic device 100 around three axes (namely, x, y, and z axes) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters; calculates, based on the angle, a distance for which a lens module needs to compensate; and enables the lens to cancel the jitter of the electronic device 100 through reverse motion, to implement image stabilization. The gyroscope sensor 180B may further be used in a navigation scenario and a somatic game scenario.

The barometric pressure sensor 180C is configured to measure a barometric pressure. In some embodiments, the electronic device 100 calculates an altitude by using a barometric pressure value measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected open or closed state of the leather case or a detected open or closed state of the flip cover.

The acceleration sensor 180E may detect magnitudes of accelerations of the electronic device 100 in various directions (usually on three axes). When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure a distance in an infrared manner or a laser manner. In some embodiments, in a photographing scene, the electronic device 100 may measure a distance by using the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light to the outside by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a flip cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to avoid abnormal shutdown of the electronic device 100 caused by a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may also be disposed on a surface of the electronic device 100 at a position different from that of the display 194.

The button 190 includes a power button, a volume button, and the like. The button 190 may be a mechanical button or a touch button. The electronic device 100 may receive a button input, and generate a button signal input related to user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external memory card. The electronic device 100 interacts with a network through the SIM card, to implement functions such as conversation and data communication.

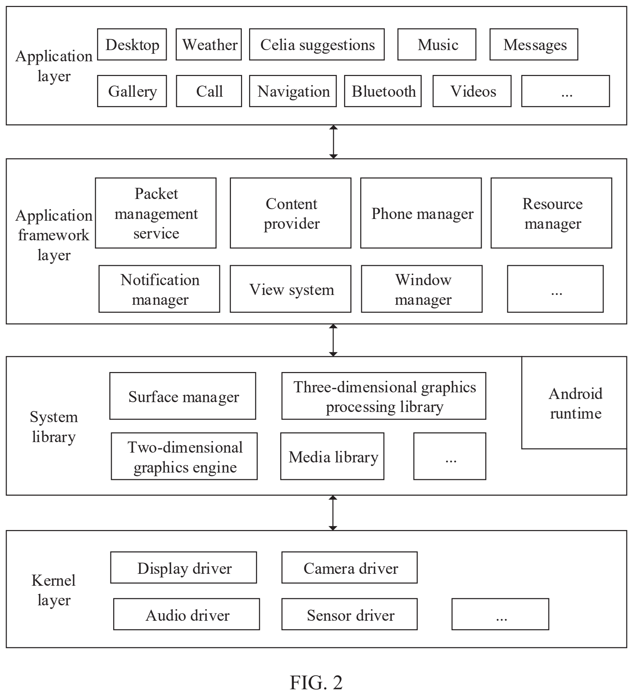

FIG. 2 is a diagram of a software framework of the electronic device 100 according to an embodiment of this application.

In a layered architecture, software is divided into several layers, and each layer has a clear role and task. The layers communicate with each other through a software interface. In some embodiments, the system is divided into four layers: an application layer, an application framework layer, a runtime (Runtime) and system library, and a kernel layer from top to bottom.

The application layer may include a series of application packages.

As shown in FIG. 2, the application packages may include applications (which may also be referred to as apps) such as Desktop, Weather, Celia suggestions, Music, Messages, Gallery, Call, Navigation, Bluetooth, and Video.

Optionally, the application packages may further include applications such as Camera, Calendar, Map, a WLAN, and Music. It may be understood that types and quantities of applications included in the application packages of the electronic device 100 change as a user downloads or uninstalls applications. Types and quantities of applications specifically included in the application packages are not limited in this embodiment of this application.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is used to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be used to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides an application with various resources, such as a localized character string, an icon, a picture, a layout file, and a video file.

The notification manager enables an application to display notification information in a status bar, and may be used to convey a notification-type message. The displayed notification information may automatically disappear after a short pause without user interaction. For example, the notification manager is used to notify download completion, give a message notification, and the like. The notification manager may alternatively display a notification in a form of a chart or a scroll bar text in a status bar at the top of the system, for example, a notification of an application run in the background, or may display a notification in a form of a dialog interface on the screen. For example, text information is prompted in the status bar, an alert tone is made, the electronic device vibrates, or an indicator blinks.

The runtime (Runtime) includes a core library and a virtual machine. The runtime is responsible for scheduling and management of the system.

The core library includes two parts: a performance function that needs to be invoked by a programming language (for example, Java language), and a system core library.

The application layer and the application framework layer run on the virtual machine. The virtual machine executes programming files (for example, Java files) of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is configured to manage a display subsystem, and provide fusion of 2-dimensional (2-Dimensional, 2D) and 3-dimensional (3-Dimensional, 3D) layers to a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The 3-dimensional graphics processing library is configured to implement drawing of 3D graphics, image rendering, synthesis, layer processing, and the like.

The 2D graphics engine is a drawing engine for 2D drawing.

The kernel layer is a layer between hardware and software. The kernel layer includes at least a display driver, a camera driver, an audio driver, a sensor driver, and a virtual card driver.

The following describes an example of a working process of software and hardware of the electronic device 100 with reference to a photographing scene.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a touch operation and a control corresponding to the touch operation is a control of a camera application icon is used. The camera application invokes an interface of the application framework layer to start the camera application, then starts the camera driver by invoking the kernel layer, and captures a static image or a video by using the camera 193.

Embodiments of this application relate to application of a folder interaction method. For ease of understanding, the following first describes, with reference to the accompanying drawings, a desktop displayed by the electronic device 100.

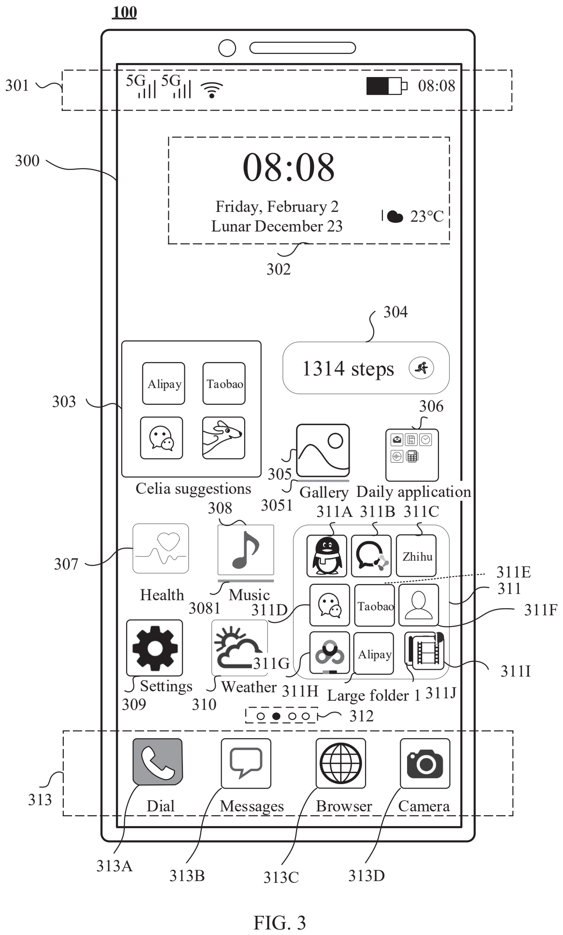

As shown in FIG. 3, the electronic device 100 may display an interface 300 of the desktop. A page on which application icons are placed is displayed on the interface 300. The page may include icons of a plurality of applications (for example, a gallery application icon 305, a health application icon 307, a music application icon 308, a settings application icon 309, and a weather application icon 310). The page may further include an icon of an application folder (for example, an icon 306 of a daily application folder and an icon 311 of a large folder 1). The application folder may be used to trigger the electronic device 100 to display one or more application icons.

The large folder 1 may include a QQ^{®} application icon 311A, a WeCom^{®} application icon 311B, a Zhihu^{®} application icon 311C, a WeChat^{®} application icon 311D, a Taobao^{®} application icon 311E, a contacts application icon 311F, a Baidu Netdisk^{®} application icon 311G, an Alipay^{®} application icon 311H, a videos application icon 311I, a stocks application icon 311I, and the like.

Optionally, the page may further include a Celia suggestion widget 303 and a health widget 304. The Celia suggestion widget 303 may display icons of one or more applications recommended by the Celia suggestion application. The health widget 304 may display health data of a user (for example, a step count "1314 steps").

Optionally, if there is a prompt bar below an application icon, it indicates that the application is embedded with a service widget. For example, a prompt bar 3051 is displayed below the gallery application icon 305. A prompt bar 3081 is displayed below the music application icon 308. For example, a user may swipe up at the application icon with a finger to invoke a service widget. For example, the user may swipe up at the gallery application icon 305 with a finger to invoke a gallery service widget.

Optionally, a page indicator 312 is further displayed on a lower part of the page on which the application icons are placed, to indicate a total quantity of pages on the desktop and a position relationship between a currently displayed page and another page. For example, the interface 300 of the desktop may include four pages, and a second black dot in the page indicator may indicate that the currently displayed page is a second page among the four pages. The second page may be referred to as a home page (or may be referred to as a main page or a first screen) of the interface 300 of the desktop.

Optionally, in some examples, the black dot in the page indicator may alternatively be in the first. When the black dot in the page indicator is in the first, it may indicate that the currently displayed page is a leftmost page among the four pages. The leftmost page may also be referred to as a HiBoard of the interface 300 of the desktop.

Optionally, in some examples, the black dot in the page indicator may alternatively be in the fourth. When the black dot in the page indicator is in the fourth, it may indicate that the currently displayed page is a rightmost page among the four pages. The rightmost page may also be referred to as a tail screen of the interface 300 of the desktop.

Optionally, a status bar 301 is further displayed on an upper part of the page on which the application icons are placed. The status bar 301 may include information such as a strength indicator of a communication signal, a battery level value, and time. Further optionally, there may be a dock (dock) area on a lower side of the page indicator. The dock area may include one or more dock icons (for example, a dial application icon 313A, a messages application icon 313B, a browser application icon 313C, and a camera application icon 313D). The one or more dock icons in the dock area can remain displayed during page switching.

Optionally, weather clock information 302 may be further displayed on the page on which the application icons are placed. The weather clock information may include time information (for example, year/month/day, week, lunar calendar, and hour/minute) and weather information (for example, an icon indicating a weather condition and a temperature).

Related terms and concepts in embodiments of this application are first described below.

### 1. Widget

The widget may include display information of one or more functions in one or more applications. The widget may be a convenient entry of an application corresponding to the widget on a desktop. The user may access, through the widget, an interface of the application corresponding to the widget, for example, the health widget 304 shown in FIG. 3. The health widget 304 is used as an example. The user may access an interface of the health application through the health widget 304.

The widget may also be referred to as a service widget, a component, or a widget component. This is not limited in this embodiment of this application. Sizes of widgets corresponding to different applications may be the same, or may be different. Sizes of widgets displayed on the desktop of the electronic device 100 are not limited in this embodiment of this application.

### 2. Large folder and small folder

A large folder on the desktop of the electronic device 100 may include icons of one or more applications, and the user may directly tap an icon of an application in the large folder to access the application. For example, for a large folder 1 shown in FIG. 3, the user may directly tap an icon of an application in the icon 311 of the large folder 1 to access the application.

A small folder on the desktop of the electronic device 100 may include icons of one or more applications. The user cannot directly tap an icon of an application in the small folder. The user needs to first tap an icon of the small folder, and in response to the user operation, the electronic device 100 may expand the icons of the applications in the small folder for magnified display. For example, the daily application folder and a utility application folder shown in FIG. 3 are both small folders. The daily application folder is used as an example. The user needs to first tap the icon 306 of the daily application folder, and the electronic device 100 expands icons of applications in the daily application folder for magnified display in response to the user operation. Then, the user may tap an icon of an application to access the application.

### 3. Celia suggestion widget

The electronic device 100 may recommend, to the user based on the user's app usage patterns over a period of time, icons of one or more apps that are most likely to be used, and place the icons in the Celia suggestion widget. Both the Celia suggestion widget and the large folder include one or more application icons, and the user may directly tap an application icon in the Celia suggestion widget or the large folder to access the application. However, an application icon in the Celia recommendation widget cannot be moved in or out based on a user operation, while an icon in the large folder can be moved in or out by the user.

In some examples, the user may drag an application icon 1 onto an application icon 2. The electronic device may generate a small folder on the desktop based on the user operation. The small folder may include the application icon 1 and the application icon 2. Then, the user may long press the small folder, and choose to display the small folder as a large folder. The user may tap to expand the large folder, and drag out an application icon in the large folder, or move an application icon on the desktop into the large folder.

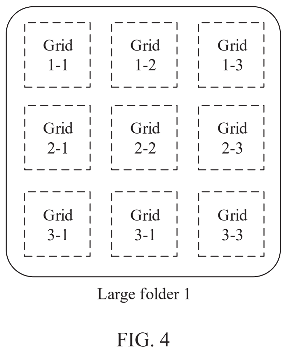

Usually, the large folder may be provided with nine grids for placing application icons. As shown in FIG. 4, the large folder 1 is used as an example. The large folder 1 may include nine grids, for example, a grid 1-1, a grid 1-2, a grid 1-3, a grid 2-1, a grid 2-2, a grid 2-3, a grid 3-1, a grid 3-2, and a grid 3-3. One application icon may be placed in each grid of the grid 1-1, the grid 1-2, the grid 1-3, the grid 2-1, the grid 2-2, the grid 2-3, the grid 3-1, and the grid 3-2. A plurality of application icons can be placed in the grid 3-3. When there are more than nine application icons in the large folder 1, a 9^{th} icon and the remaining icons may be placed in the grid 3-3. For example, the large folder 1 shown in FIG. 3 is used. A videos application icon 3111 and a stocks application icon 311J are placed in the grid 3-3 of the large folder 1.

Optionally, in some feasible examples, when a plurality of application icons are placed in the grid 3-3 of the large folder 1, sizes of the plurality of application icons are smaller than sizes of application icons in another grid (for example, the grid 1-1). That is, a size of the videos application icon 311J and a size of the stocks application icon 311J may be smaller than a size of an application icon such as the QQ^{®} application icon 311A, the WeCom^{®} application icon 311B, the Zhihu^{®} application icon 311C, the WeChat^{®} application icon 311D, the Taobao^{®} application icon 311E, the contacts application icon 311F, the Baidu Netdisk^{®} application icon 311G, and the Alipay^{®} application icon 311H.

In some examples, for an application icon in a grid such as the grid 1-1, the grid 1-2, the grid 1-3, the grid 2-1, the grid 2-2, the grid 2-3, the grid 3-1, and the grid 3-2, the user may directly tap an application icon in the large folder 1 to start a corresponding application. However, for an application icon in the grid 3-3, the user cannot directly tap an application icon in the large folder 1 to start a corresponding application. If the user wants to start the application icon in the grid 3-3, the user needs to first expand the large folder 1, and then tap the application icon to start the corresponding application.

In some examples, the grid 3-3 may be referred to as a grid at a lower right corner in the large folder 1.

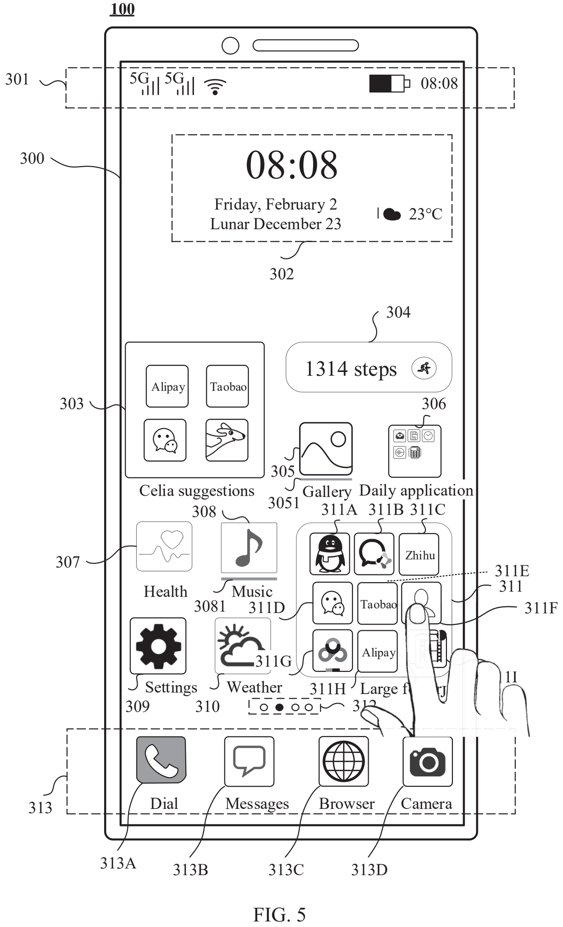

In some examples, when the user long presses the large folder 1, a shortcut menu corresponding to the large folder 1 may be invoked, but an application shortcut menu corresponding to an application icon at a position touched by a finger of the user cannot be directly invoked. For example, as shown in FIG. 5, the user may long press the icon 311 of the large folder 1 on the interface 300 of the desktop, and the electronic device 100 may display a user interface 600 in response to the user operation.

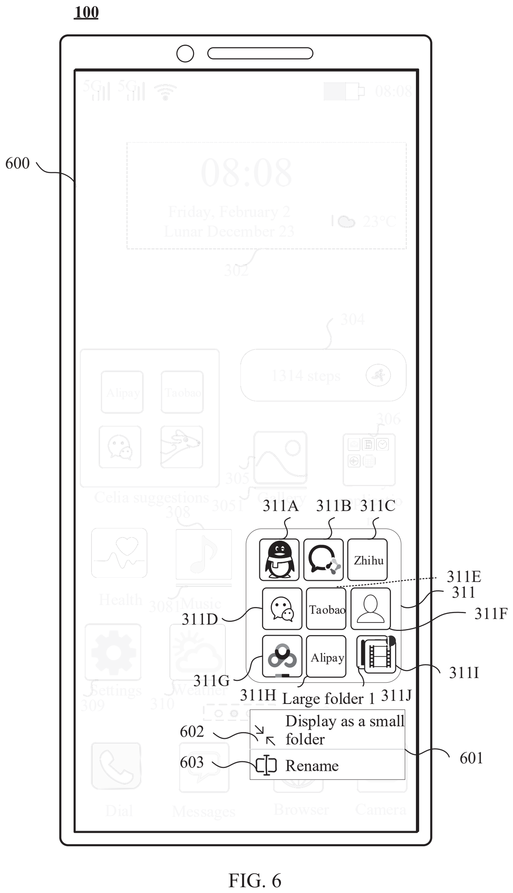

FIG. 6 shows an example of the user interface 600 of the electronic device 100. As shown in FIG. 6, the user interface 600 may include the icon 311 of the large folder 1 and a shortcut menu 601 of the large folder 1. The shortcut menu 601 may include a function option 602 and a function option 603. The function option 602 may be used to display the large folder 1 as a small folder. The function option 603 may be used to rename the large folder 1.

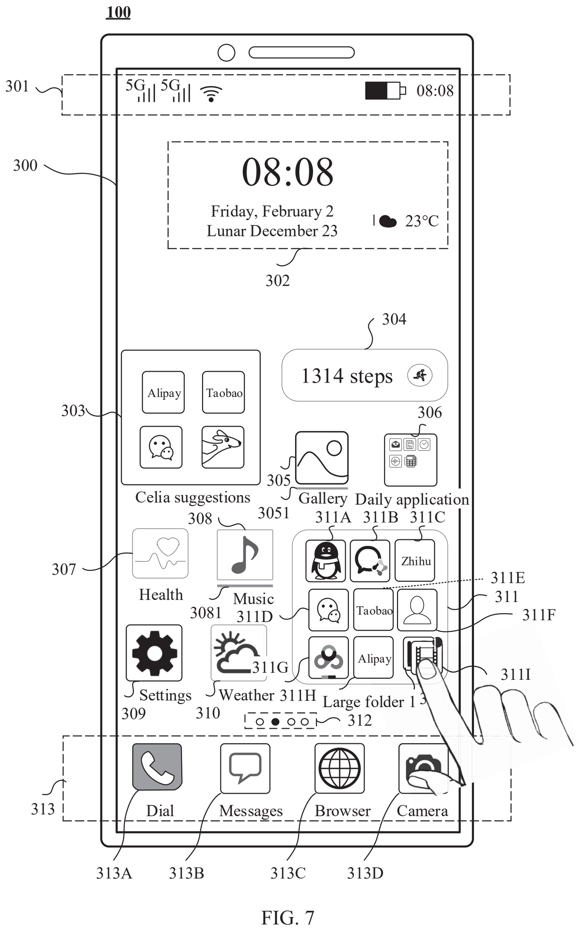

In some examples, if the user wants to invoke an application shortcut menu by long pressing an application icon, or move out an application icon in the large folder 1 or reposition the application icon by long pressing and dragging the application icon, the user needs to first expand the large folder 1 by tapping a lower right corner of the large folder 1, and then perform an operation such as long pressing or dragging on a target application. For example, as shown in FIG. 7, the user may tap an area in which the videos application icon 311I in the large folder 1 is located, and the electronic device 100 may display a user interface 800 in response to the user operation.

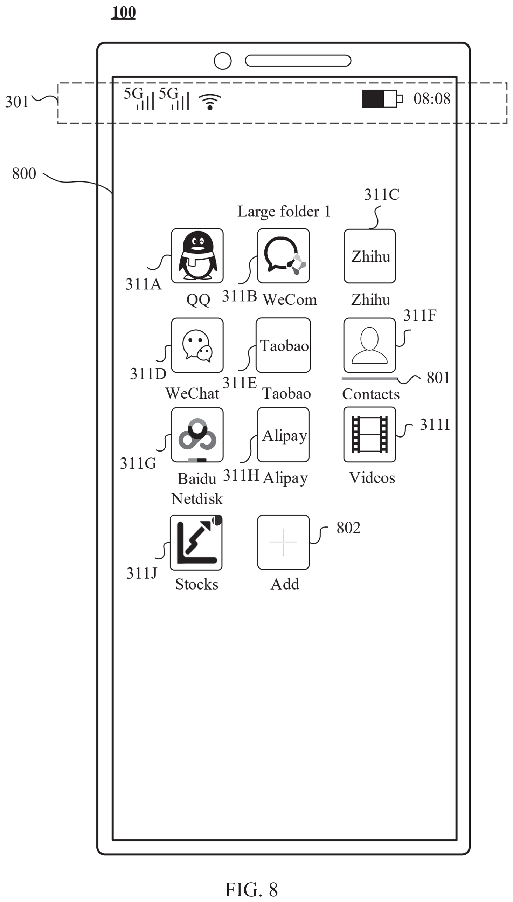

FIG. 8 shows an example of the user interface 800 of the electronic device 100. As shown in FIG. 8, the user interface 800 expands the large folder 1 for display. Specifically, the user interface 800 may include the QQ^{®} application icon 311A and an application name "QQ^{®}" corresponding to the QQ^{®} application icon 311A, the WeCom^{®} application icon 311B and an application name "WeCom^{®}" corresponding to the WeCom^{®} application icon 311B, the Zhihu^{®} application icon 311C and an application name "Zhihu^{®}" corresponding to the Zhihu^{®} application icon 311C, the WeChat^{®} application icon 311D and an application name "WeChat^{®}" corresponding to the WeChat^{®} application icon 311D, the Taobao^{®} application icon 311E and an application name "Taobao^{®}" corresponding to the Taobao^{®} application icon 311E, the contacts application icon 311F and an application name "Contacts" corresponding to the contacts application icon 311F, the Baidu Netdisk^{®} application icon 311G and an application name "Baidu Netdisk^{®}" corresponding to the Baidu Netdisk^{®} application icon 311G, the Alipay^{®} application icon 311H and an application name "Alipay^{®}" corresponding to the Alipay^{®} application icon 311H, the videos application icon 3111 and an application name "Videos" corresponding to the videos application icon 311I, and the stocks application icon 311J and an application name "Stocks" corresponding to the stocks application icon 311J.

Optionally, the user interface 800 may further include a prompt bar 801, and the prompt bar 801 may be located below the contacts application icon 311F. The prompt bar 801 may prompt that the contacts application is embedded with a service widget. The user may swipe up at the contacts application icon 311F with a finger to invoke the service widget.

Optionally, the user interface 800 may further include a control 802, and the control 802 may be used to add an application icon to the folder 1.

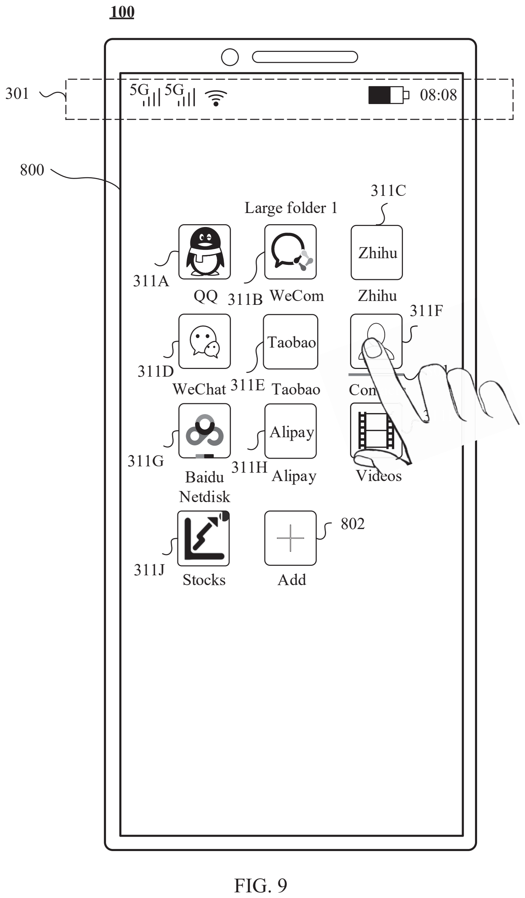

When the user wants to invoke an application shortcut menu corresponding to an application icon in the large folder 1, the user may long press the application icon on the user interface 800. For example, as shown in FIG. 9, the user may further long press the contacts application icon 311F on the user interface 800. In response to the user operation, the electronic device 100 may display a user interface 1000.

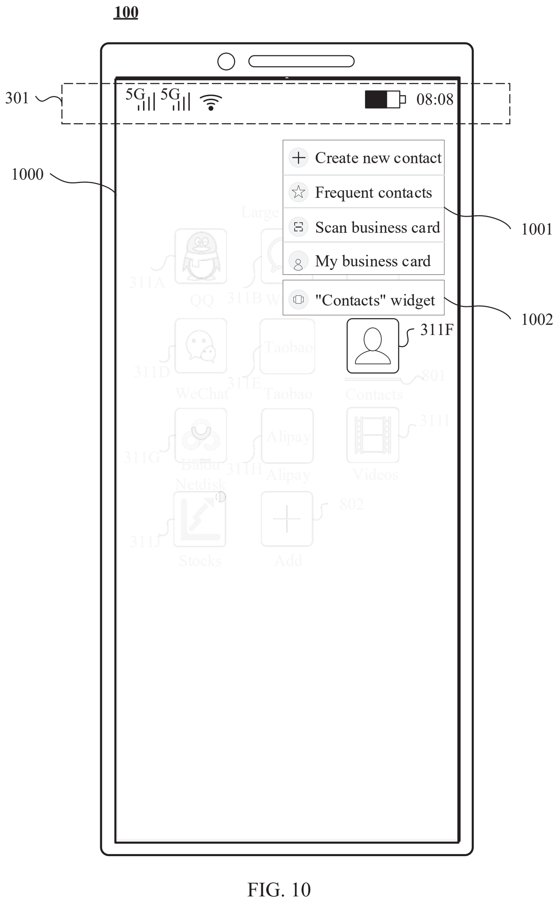

FIG. 10 shows an example of the user interface 1000 of the electronic device 100. As shown in FIG. 10, the user interface 1000 may include the contacts application icon 311F, and an application shortcut menu 1001 and an application shortcut menu 1002 that correspond to the contacts application icon 311F. The application shortcut menu 1001 may include one or more function options provided by the contacts application, for example, a "Create new contact" function option, a "Frequent contacts" function option, a "Scan business card" function option, and a "My business card" function option. The application shortcut menu 1002 may include a function option for invoking a service widget of the contacts application, and a name of the function option may be: "Contacts" widget. It may be understood that specific function options included in the application shortcut menu 1001 and the application shortcut menu 1002 and a quantity of included function options are not limited in this embodiment of this application.

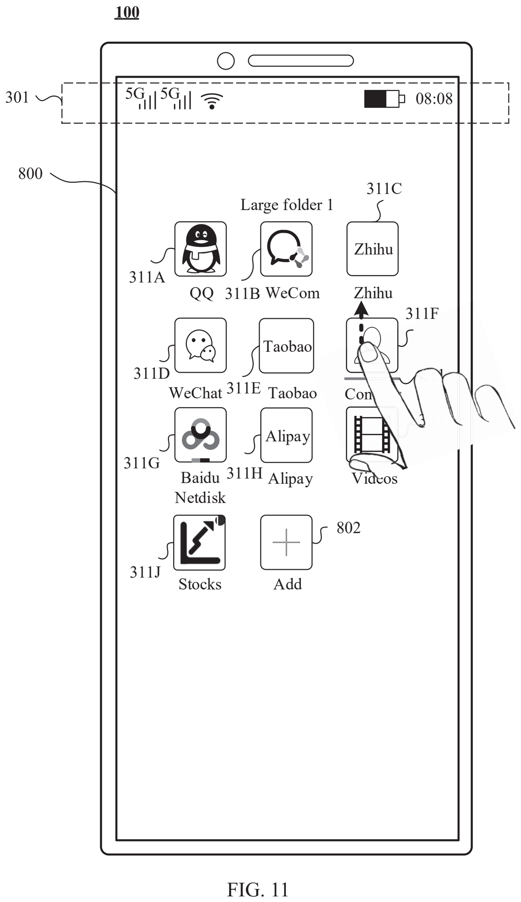

Optionally, in some examples, after the large folder is expanded, the user may further invoke a service widget by performing a swipe-up operation. For example, as shown in FIG. 11, the user may swipe up at the contacts application icon 311F on the user interface 800. In response to the user operation, the electronic device 100 may display a service widget of the contacts application.

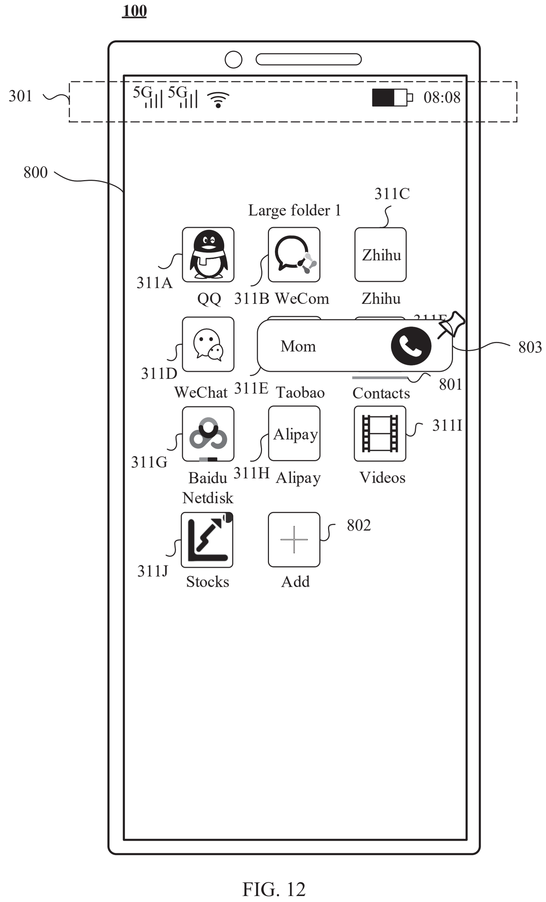

As shown in FIG. 12, the electronic device 100 may display a service widget 803 of the contacts application on the user interface 800. Optionally, the service widget 803 may cover the contacts application icon 311F. A specific shape and size of the service widget 803 and specific content included in the service widget 803 are not limited in this embodiment of this application.

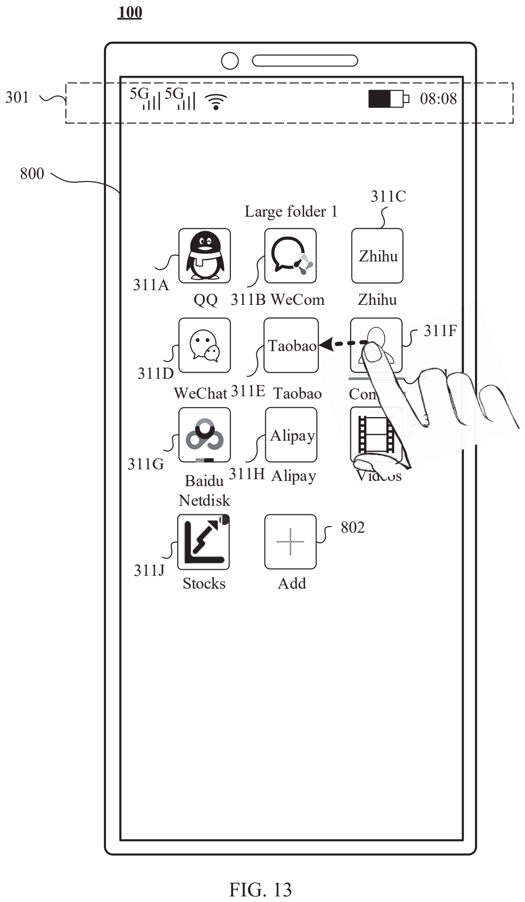

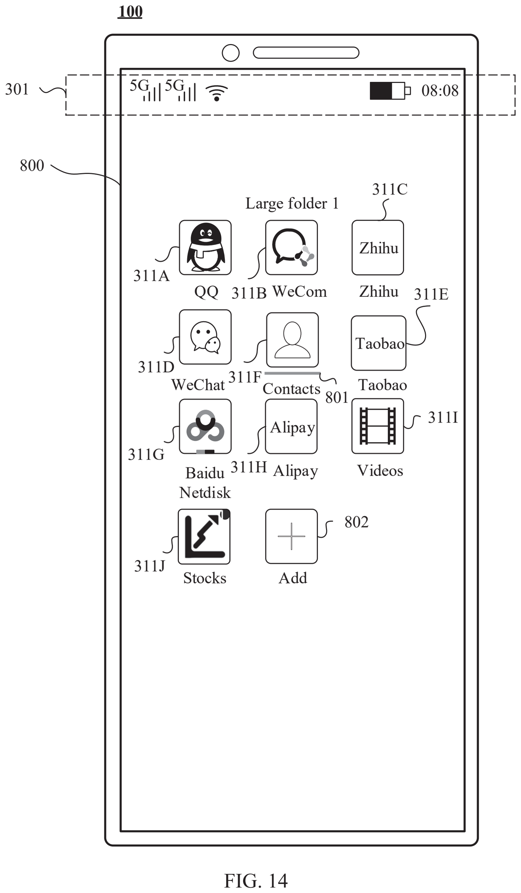

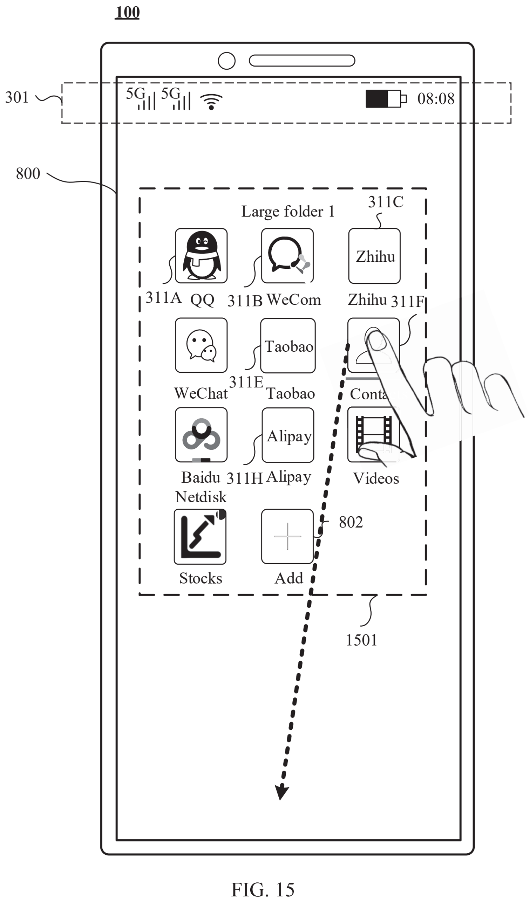

Optionally, in some examples, after the large folder is expanded, the user may further move a position of an application icon in the large folder. For example, as shown in FIG. 13, the user may long press the contacts application icon 311F on the user interface 800, and drag the contacts application icon 311F to the Taobao^{®} application icon 311E. In response to the user operation, the electronic device 100 may move a position of the contacts application icon 311F. As shown in FIG. 14, the electronic device 100 may move the contacts application icon 311F to a position of the Taobao^{®} application icon 311E. Correspondingly, the electronic device 100 moves the Taobao^{®} application icon 311E to the position at which the contacts application icon 311F is located before the user operation. That is, the electronic device 100 exchanges positions of the contacts application icon 311F and the Taobao^{®} application icon 311E based on the user operation. It may be understood that the user may alternatively move the contacts application icon 311F to any position in an area (for example, an area 1501 shown in FIG. 15) in which the large folder 1 is located. This is not limited in this embodiment of this application.

Optionally, in some examples, after the large folder is expanded, the user may further long press and drag an application icon, to move the application icon out of the large folder. For example, as shown in FIG. 15, the user may long press the contacts application icon 311F in the large folder 1 on the user interface 800, and drag the contacts application icon 311F out of the area 1501 in which the large folder 1 is located. In response to the user operation, the electronic device 100 may no longer display the contacts application icon 311F in the large folder 1.

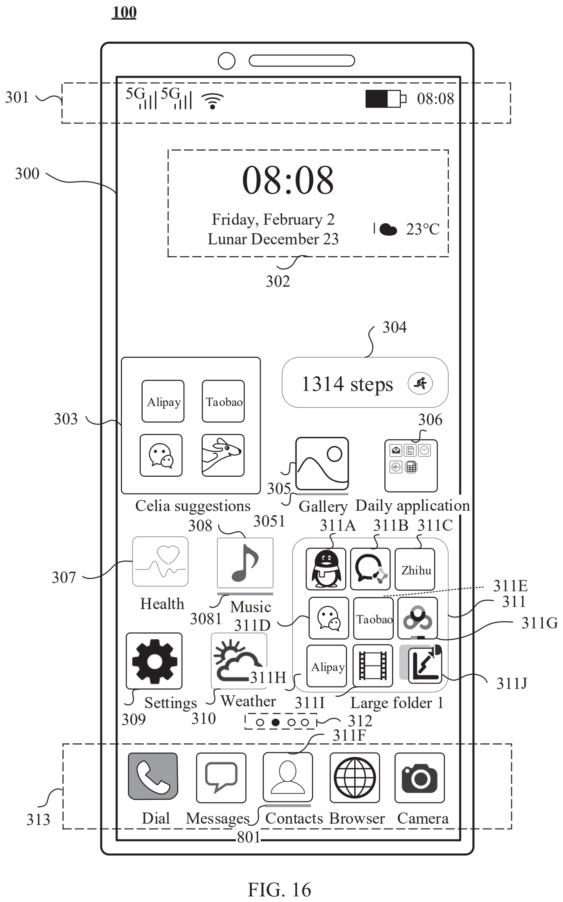

As shown in FIG. 16, the user may drag the contacts application icon 311F to a dock area 313. The contacts application icon 311F may be displayed in the dock area 313 on the interface 300 of the desktop. The electronic device 100 may further adjust a position of an application icon in the large folder 1. For example, the electronic device 100 may adjust a position of an application icon in a next row of grids below the contacts application icon 311F (for example, a position of an application icon such as the Baidu Netdisk^{®} application icon 311G, the Alipay^{®} application icon 311H, the videos application icon 311I, and the stocks application icon 311J).

In a related user interface shown in FIG. 3 to FIG. 16 on which the user performs an operation on the large folder or on an application icon in the large folder, if the user wants to invoke an application shortcut menu corresponding to an icon of the target application in the large folder, or move the icon of the target application in the large folder, or swipe up at the icon of the target application to invoke a service widget, or drag the icon of the target application out of the large folder, the user needs to first tap a grid in a lower right corner of the large folder to expand the large folder. Then, the user can perform an operation such as long pressing, long pressing and dragging, or swiping up at the icon of the target application. This makes user operations not sufficiently convenient and affects user experience.

An embodiment of this application provides a folder interaction method. In the method, a user can directly long press an icon of a target application in a large folder to invoke a corresponding application shortcut menu, without expanding the large folder. In addition, the user may also directly long press the icon of the target application in the large folder to move a position of the icon of the target application in the large folder or drag the icon of the target application out of the large folder, without expanding the large folder. In addition, the user may also directly swipe up at the icon of the target application in the large folder to invoke a corresponding service widget, without expanding the large folder. In this way, user operations are simpler and faster, thereby enhancing user experience.

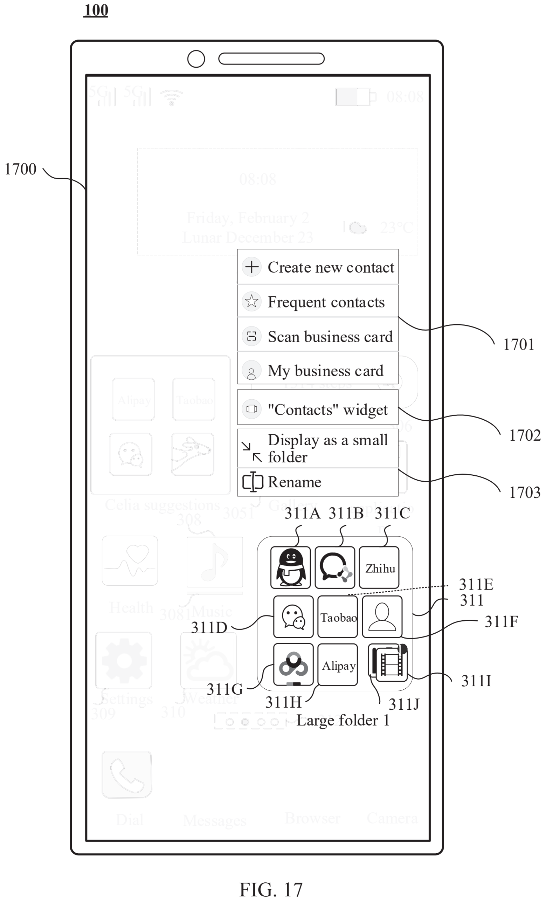

FIG. 17 to FIG. 22 are examples of diagrams of related user interfaces on which a user performs an operation on an icon of a target application of a large folder without expanding the large folder.

In this embodiment of this application, when the large folder is not expanded, the user may directly long press the icon of the target application in the large folder, to invoke a shortcut menu corresponding to the icon of the target application.

As shown in FIG. 5, when the user long presses the contacts application icon 311F in the large folder 1, the electronic device 100 may display a user interface 1700 in response to the user operation.

FIG. 17 shows an example of the user interface 1700 of the electronic device 100. As shown in FIG. 17, the user interface 1700 may display the icon 311 of the large folder 1, a contacts application shortcut menu 1701, a contacts application shortcut menu 1702, and a shortcut menu 1703 of the large folder 1. For the contacts application shortcut menu 1701, refer to the foregoing descriptions of the application shortcut menu 1001. Details are not described herein again. For the contacts application shortcut menu 1702, refer to the foregoing descriptions of the application shortcut menu 1002. Details are not described herein again. For the shortcut menu 1703, refer to the foregoing descriptions of the shortcut menu 601. Details are not described herein again.

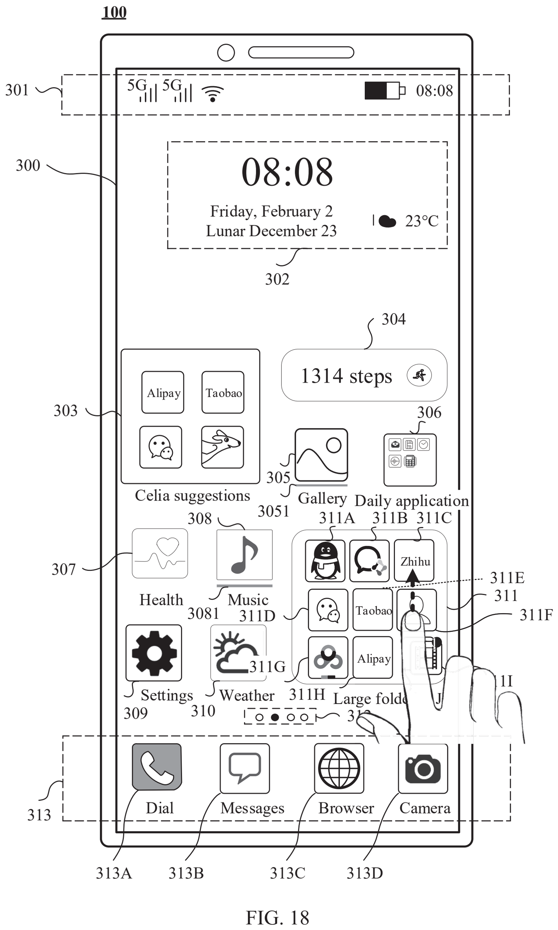

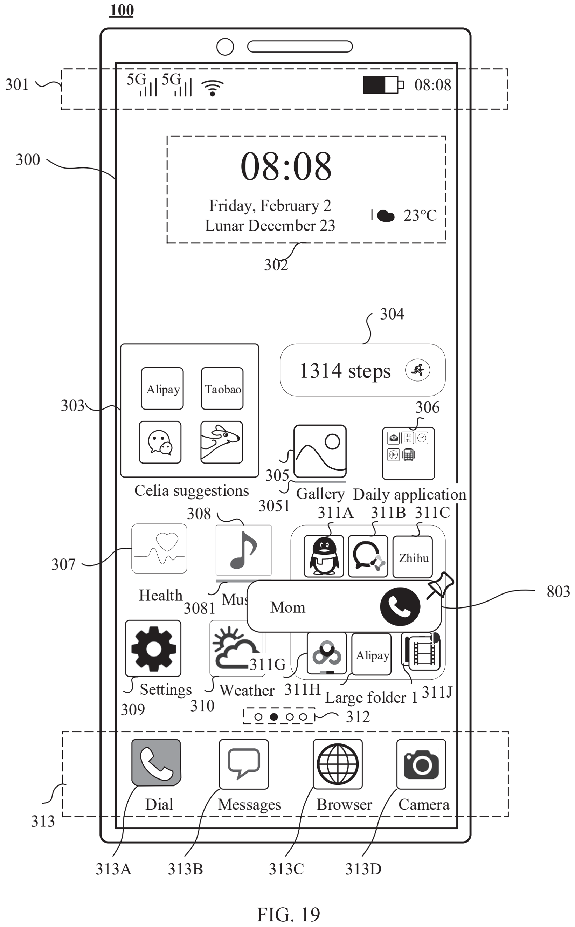

In this embodiment of this application, when the large folder is not expanded, the user may directly swipe up at the icon of the target application to invoke a corresponding service widget. The target application is an application configured with a service widget. When the target application is in the large folder, and the large folder is not expanded, a prompt bar may not be displayed below the icon of the target application. After the large folder is expanded, the prompt bar may be displayed below the icon of the target application. For example, as shown in FIG. 18, the user may swipe up at the contacts application icon 311F in the icon 311 of the large folder 1, and in response to the user operation, the electronic device 100 may display a service widget corresponding to the contacts application icon 311F. As shown in FIG. 19, the electronic device 100 may display a service widget 803 corresponding to the contacts application icon 311F. Optionally, the service widget 803 may cover the icon 311 of the large folder 1.

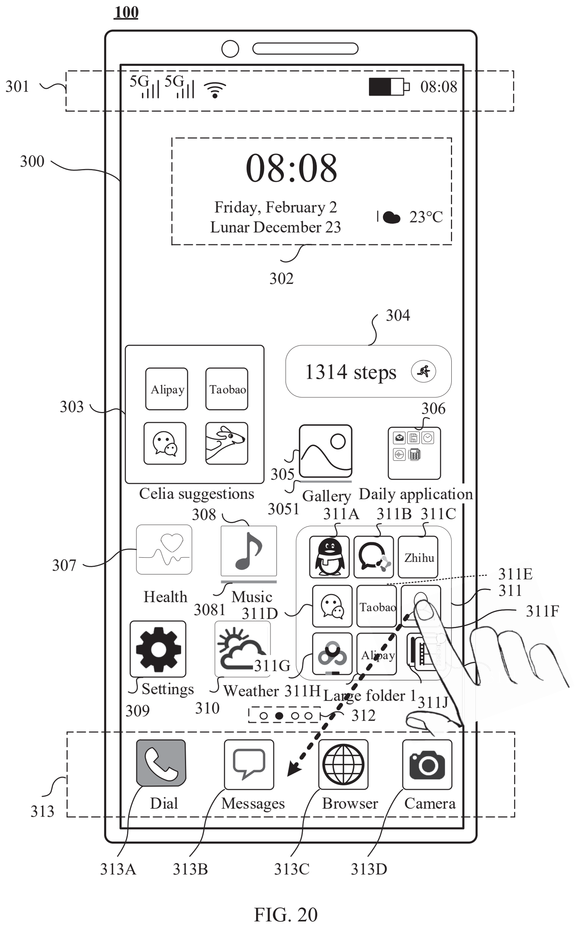

In this embodiment of this application, when the large folder is not expanded, the user may directly long press and drag the target application, to move the target application out of the large folder. For example, as shown in FIG. 20, the user may long press and drag the contacts application icon 311F in the large folder 1 to the dock area 313. In response to the user operation, the electronic device 100 may display the contacts application icon 311F in the dock area 313. For example, as shown in FIG. 16, the contacts application icon 311F may be displayed in the dock area 313 on the interface 300 of the desktop. The electronic device 100 may further adjust a position of an application icon in the large folder 1. For example, the electronic device 100 may adjust a position of an application icon in a next row of grids below the contacts application icon 311F (for example, a position of an application icon such as the Baidu Netdisk^{®} application icon 311G, the Alipay^{®} application icon 311H, the videos application icon 311I, and the stocks application icon 311J).

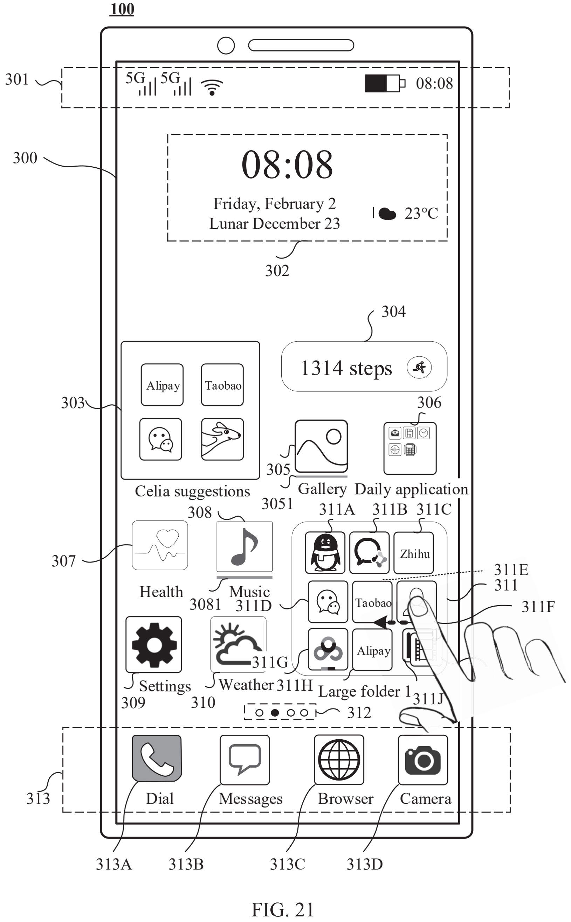

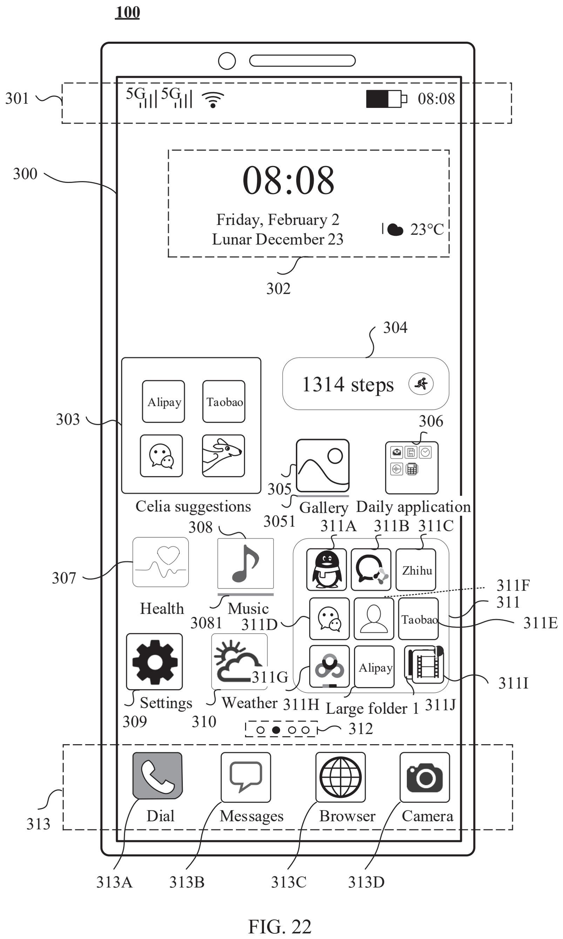

In this embodiment of this application, when the large folder is not expanded, the user may directly long press and drag the target application, to move a position of the target application in the large folder. For example, as shown in FIG. 21, the user may long press the contacts application icon 311F, and move the contacts application icon 311F to the Taobao^{®} application icon 311E. In response to the user operation, the electronic device 100 moves a position of the contacts application icon 311F in the large folder 1. As shown in FIG. 22, the electronic device 100 may move the contacts application icon 311F from a grid 2-3 in which the contacts application icon 311F is originally located to a grid 3-2. Correspondingly, the electronic device 100 may move the Taobao^{®} application icon 311E originally located in the grid 3-2 from the grid 2-2 to the grid 3-3. That is, the electronic device 100 exchanges positions of the contacts application icon 311F and the Taobao^{®} application icon 311E based on the user operation. It may be understood that the user may move the contacts application icon 311F to any one of nine grids of the large folder 1. This is not limited in this embodiment of this application.

Optionally, in a possible implementation, when the user moves the contacts application icon 311F to a grid at a lower right corner of the large folder 1, that is, a grid 3-3, the electronic device 100 may display the contacts application icon 311F in a reduced size.

Optionally, in this embodiment of this application, when the large folder is not expanded, the user can long press only application icons in eight grids of the large folder, namely, a grid 1-1, a grid 1-2, a grid 1-3, a grid 2-1, a grid 2-2, a grid 2-3, a grid 3-1, and a grid 3-2, to invoke a corresponding application shortcut menu, or perform a long pressing and dragging operation to move a position of the application icon or to move the application icon out of the large folder, or swipe up at the application icon to invoke a corresponding service widget. When the user long presses an application icon in the grid 3-3, only the shortcut menu of the large folder can be displayed. When the user long presses and drags at the grid 3-3, the user can move a position of the large folder on the desktop. When the user taps at the grid 3-3 of the large folder, the electronic device 100 may expand the large folder. In this way, related functions (for example, invoking a shortcut menu corresponding to an application icon, moving the application icon, moving the application icon out of the large folder, and invoking a service widget) of application icons in the eight grids, namely, the grid 1-1, the grid 1-2, the grid 1-3, the grid 2-1, the grid 2-2, the grid 2-3, the grid 3-1, and the grid 3-2 of the large folder can be conveniently and quickly implemented, without affecting implementation of original functions (for example, functions such as expanding the large folder and moving the large folder) of the large folder.

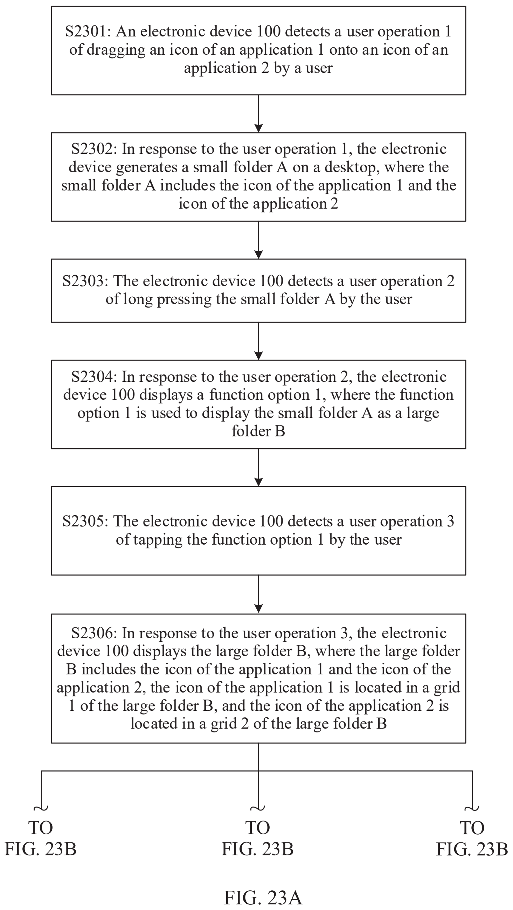

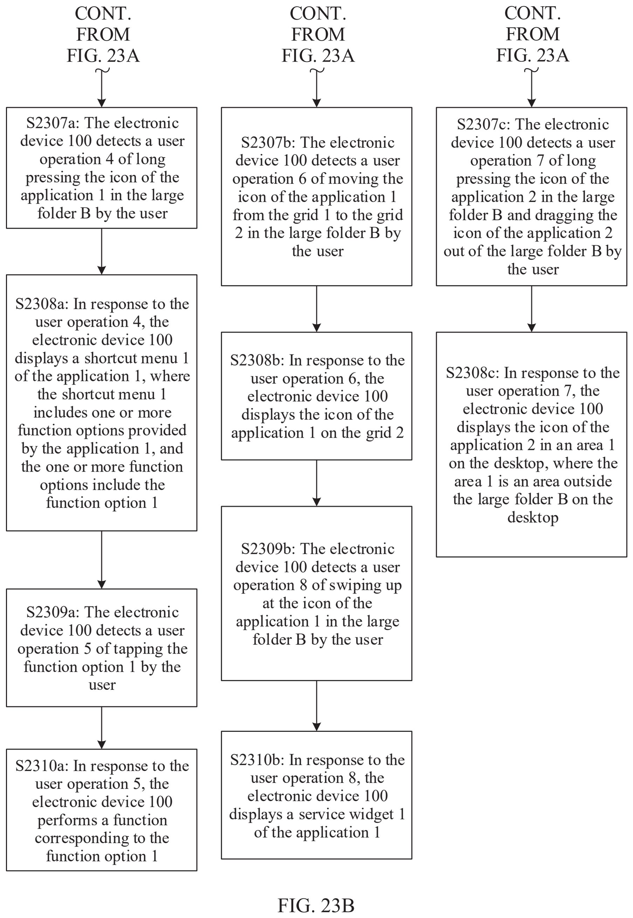

FIG. 23A and FIG. 23B are an example of a flowchart of a folder interaction method according to an embodiment of this application. As shown in FIG. 23A and FIG. 23B, the folder interaction method provided in this embodiment of this application may include the following steps.

S2301: An electronic device 100 detects a user operation 1 of dragging an icon of an application 1 onto an icon of an application 2 by a user.

S2302: In response to the user operation 1, the electronic device 100 generates a small folder A on a desktop, where the small folder A includes the icon of the application 1 and the icon of the application 2.

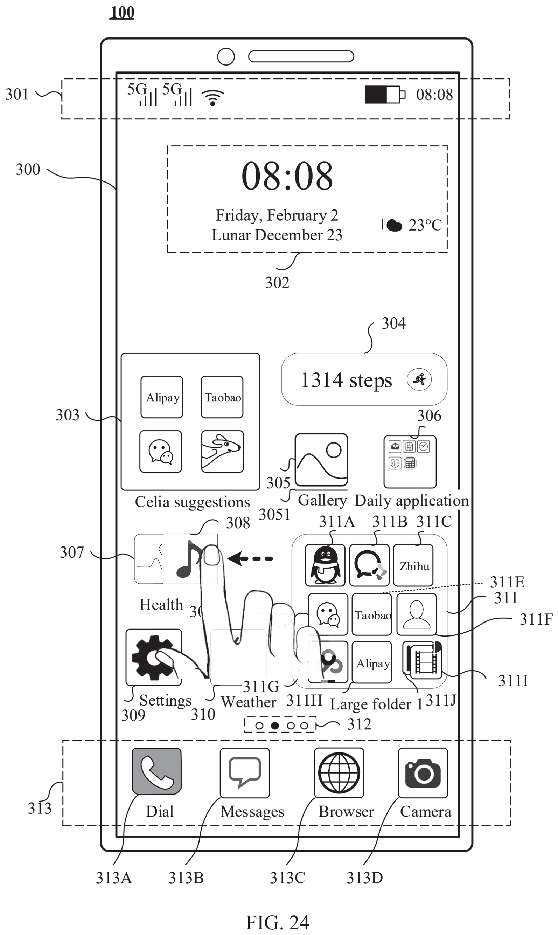

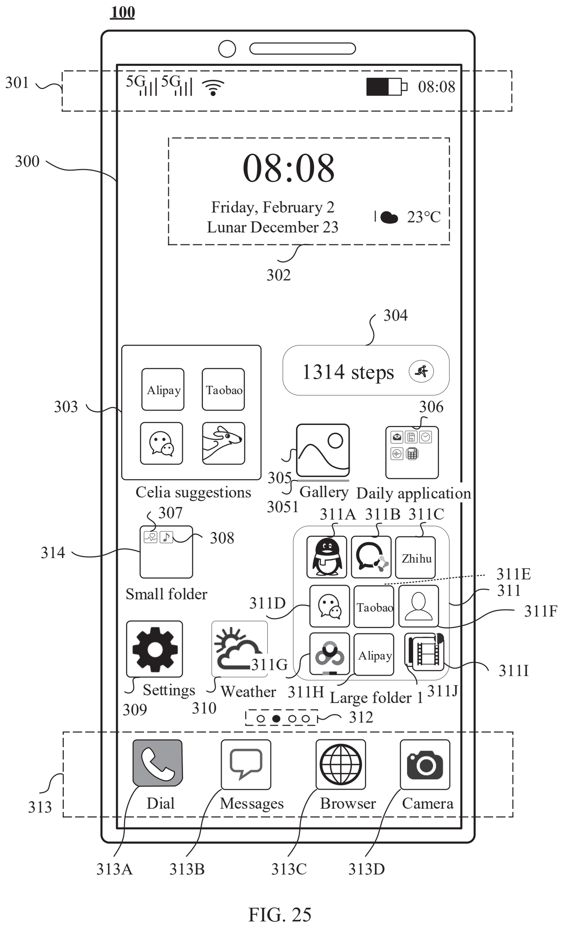

The user may combine icons of any two applications into a small folder on the desktop of the electronic device 100. For example, the user may drag the icon of the application 1 onto the icon of the application 2. Upon detecting the user operation 1, the electronic device 100 may generate the small folder A on the desktop. The small folder A may include the icon of the application 1 and the icon of the application 2. For example, the icon of the application 1 may be the music application icon 308 shown in FIG. 3, and the icon of the application 2 may be the health application icon 307 shown in FIG. 3. As shown in FIG. 24, the user may drag the music application icon 308 onto the health application icon 307. In response to the user operation, as shown in FIG. 25, the electronic device 100 may generate a small folder, and display an icon 314 of the small folder. The small folder may include the music application icon 308 and the health application icon 307.

It may be understood that the electronic device 100 may display the icon of the application 1 and the icon of the application 2 in a reduced size in the small folder A. In other words, a size of the icon of the application 1 and a size of the icon of the application 2 in the small folder A are both smaller than a size of the icon of the application 1 displayed on the desktop and a size of the icon of the application 2 displayed on the desktop before the user operation 1. As shown in FIG. 25, a size of the music application icon 308 in the folder may be smaller than a size of the music application icon 308 shown in FIG. 3. A size of the health application icon 307 in the small folder shown in FIG. 25 may be smaller than a size of the health application icon 307 shown in FIG. 3. In this way, the small folder can contain more application icons.

S2303: The electronic device 100 detects a user operation 2 of long pressing the small folder A by the user.

S2304: In response to the user operation 2, the electronic device 100 displays a function option 1, where the function option 1 is used to display the small folder A as a large folder B.

S2305: The electronic device 100 detects a user operation 3 of tapping the function option 1 by the user.

S2306: In response to the user operation 3, the electronic device 100 displays the large folder B, where the large folder B includes the icon of the application 1 and the icon of the application 2, the icon of the application 1 is located in a grid 1 of the large folder B, and the icon of the application 2 is located in a grid 2 of the large folder B.

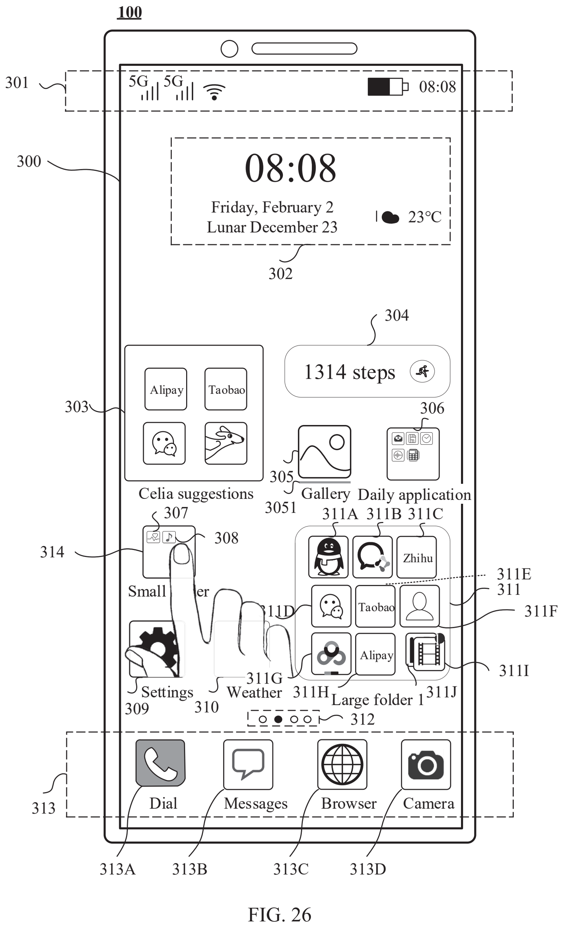

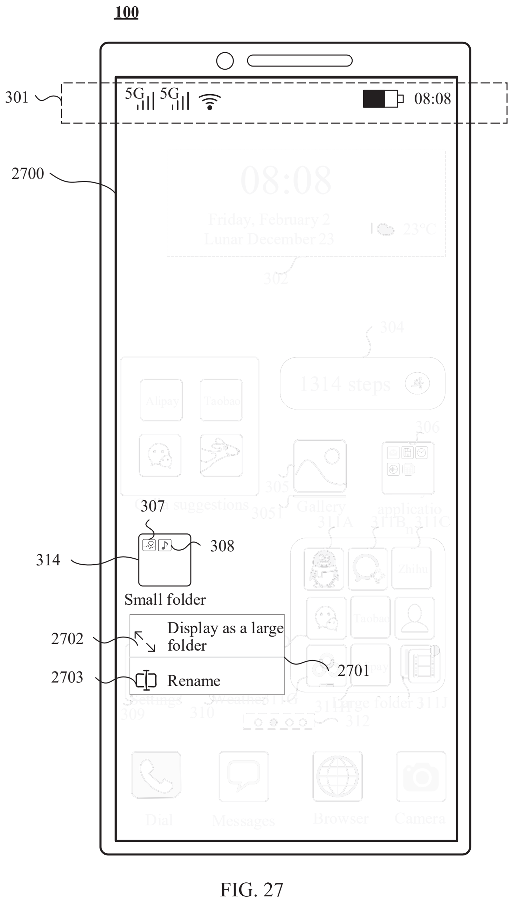

The user may further display the small folder A as the large folder B on the electronic device 100. Specifically, the electronic device 100 may detect the user operation 2 of long pressing the small folder A by the user. In response to the user operation 2, the electronic device 100 may display a shortcut menu of the small folder, and the shortcut menu may include the function option 1. The function option 1 may be used to display the small folder A as the large folder B. For example, the small folder shown in FIG. 26 is used as an example. As shown in FIG. 26, the user may long press the icon 314 of the small folder. In response to the user operation, the electronic device 100 may display a shortcut menu 2701 shown in FIG. 27. The shortcut menu 2701 may include a function option 2702 used to display the small folder as a large folder and a function option 2703 used to rename the small folder.

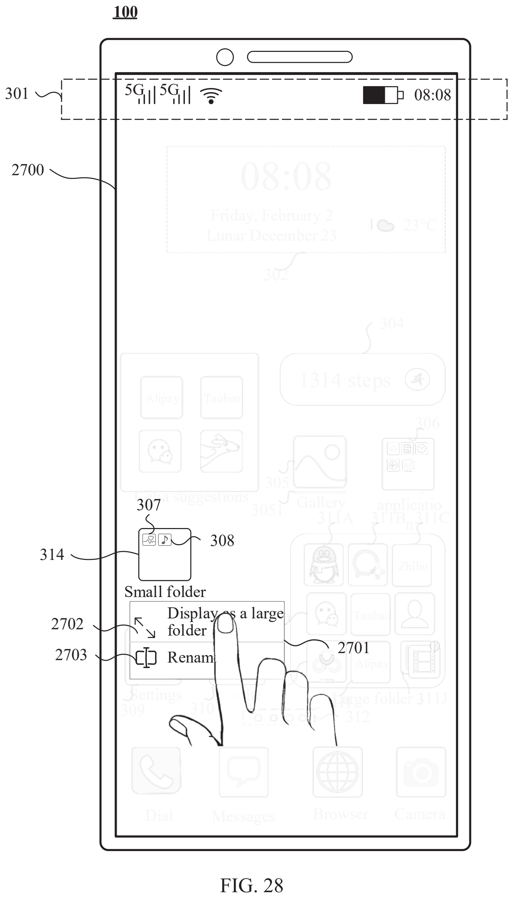

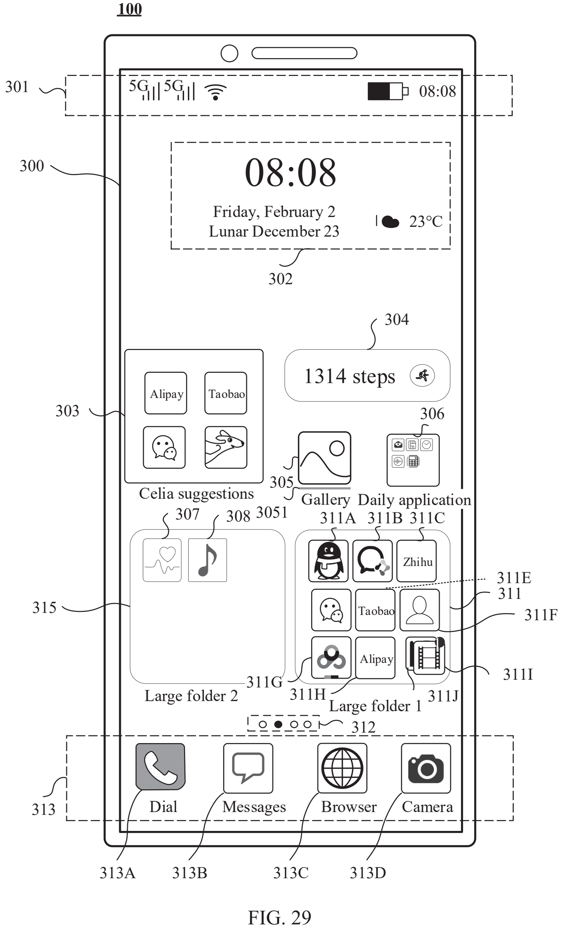

The function option 1 may be the function option 2702 shown in FIG. 27. As shown in FIG. 28, the user may tap the function option 2702. In response to the user operation, the electronic device 100 may display a large folder 2 shown in FIG. 29.

It may be understood that the large folder B may be the large folder 2 shown in FIG. 29, or may be the large folder 1 shown in FIG. 27. When the large folder B is the large folder 1 shown in FIG. 27, for a display process of the large folder 1, reference may be made to a display process of the large folder 2. There may be more than two application icons in the large folder B. In some examples, after combining two application icons into a small folder, the user may continue to move another application icon into the small folder, then long press the small folder, and tap the function option 1 to display the small folder as a large folder. Optionally, in some other examples, the user may alternatively display the small folder A as the large folder B, and then drag or add an application icon to the large folder B.

In this embodiment of this application, after the large folder is displayed on the desktop of the electronic device 100, the user may directly perform the following four operations on an application in the large folder without expanding the large folder.

Operation manner 1: in step S2307a to step S2310a, directly long press an application icon in the large folder to invoke a shortcut menu of the application, without

### expanding the large folder.

S2307a: The electronic device 100 detects a user operation 4 of long pressing the icon of the application 1 in the large folder B by the user.

S2308a: In response to the user operation 4, the electronic device 100 displays a shortcut menu 1 of the application 1, where the shortcut menu 1 includes one or more function options provided by the application 1, and the one or more function options include the function option 1.

S2309a: The electronic device 100 detects a user operation 5 of tapping the function option 1 by the user.

S2310a: In response to the user operation 5, the electronic device 100 performs a function corresponding to the function option 1.

The electronic device 100 may detect the user operation 4, and the user operation 4 is a user operation of long pressing the icon of the application 1 in the large folder B by the user. For example, the icon of the application 1 may be the contacts application icon 311F in the large folder 1 shown in FIG. 5. The user operation 4 may be that the user long presses the contacts application icon 311F in the large folder 1.

In response to the user operation 4, the electronic device 100 may display the shortcut menu 1 of the application 1. The shortcut menu 1 includes one or more function options provided by the application 1, and the one or more function options include the function option 1. For example, as shown in FIG. 17, the shortcut menu 1 may be the contacts application shortcut menu 1701 and/or the contacts application shortcut menu 1702 shown in FIG. 17. The function option 1 may be any function option included in the contacts application shortcut menu 1701 and/or the contacts application shortcut menu 1702.

Optionally, when displaying the shortcut menu 1 of the application 1, the electronic device 100 may further display a shortcut menu of the large folder B. For example, the shortcut menu of the large folder B may be the shortcut menu 1703 of the large folder 1 shown in FIG. 17. This is not limited in this embodiment of this application.

Optionally, the electronic device 100 may further detect the user operation 5 of tapping the function option 1 by the user. In response to the user operation 5, the electronic device 100 may perform a function corresponding to the function option 1. For example, the function option 1 is the "Create new contact" function option shown in FIG. 17. When the user taps the "Create new contact" function option, in response to the user operation, the electronic device 100 may access a page for creating a new contact in the contacts application. On this page, the user can add contact-related information (for example, a contact name or a phone number).

It may be understood that shortcut menus corresponding to different applications may include different function options. This embodiment of this application does not impose any limitation on the shortcut menu 1 of application 1, nor on a specific function option included in the shortcut menu 1.

Operation manner 2: in step S2307b and step S2308b, directly long press an application icon in the large folder B and move a position of the application icon in the large folder, without expanding the large folder.

S2307b: The electronic device 100 detects a user operation 6 of moving the icon of the application 1 from the grid 1 to the grid 2 in the large folder B by the user.

S2308b: In response to the user operation 6, the electronic device 100 displays the icon of the application 1 on the grid 2.

Optionally, in a possible implementation, the user may further long press the icon of the application 1 and move a position of the icon of the application 1, without expanding the large folder B. The electronic device 100 may detect the user operation 6 of moving the icon of the application 1 from the grid 1 to the grid 2 in the large folder B by the user. In response to the user operation 6, the electronic device 100 may display the icon of the application 1 in the grid 2. For example, the icon of the application 1 is the contacts application icon 311F shown in FIG. 21. The user may move the contacts application icon 311F to a grid in which the Taobao^{®} application icon 311E is located. In response to the user operation, as shown in FIG. 22, the electronic device 100 may move the contacts application icon 311F to the grid in which the Taobao^{®} application icon 311E is located. For details, refer to the foregoing descriptions in FIG. 22. Details are not described herein again.

Optionally, in a possible implementation, if the grid 2 and the grid 1 are in a same row and adjacent to each other, and the grid 2 is located on a left side of the grid 1, when the electronic device 100 displays the icon of the application 1 on the grid 2, the electronic device 100 may further display the icon of the application 2 on the grid 1.

Optionally, in a possible implementation, if the grid 2 is located in an upper row of the grid 1, when displaying the icon of the application 1 in the grid 2, the electronic device 100 may further display the icon of the application 2 in a grid on a right side adjacent to the grid 2 or in a grid of a next row. For example, the large folder 1 shown in FIG. 4 has three rows of grids. If the grid 2 is located in the first row, the grid 1 is located in the second row or the third row. If the grid 2 is located in the grid 1-1 in the first row, when displaying the icon of the application 1 in the grid 1-1, the electronic device 100 may display the icon of the application 2 in the grid 1-2. If the grid 2 is the grid 1-2, when displaying the icon of the application 1 in the grid 1-2, the electronic device 100 may display the icon of the application 2 in the grid 1-3. If the grid 2 is the grid 1-3, when displaying the icon of the application 1 in the grid 1-3, the electronic device 100 may display the icon of the application 2 in the grid 2-1.

Optionally, in a possible implementation, if the grid 2 is located in a next row of the grid 1, when displaying the icon of the application 1 in the grid 2, the electronic device 100 may further display the icon of the application 2 in a grid on a left side adjacent to the grid 2 or in a grid of an upper row.

**Operation manner 3: in step S2309b and step S2310b, directly swipe up at an application icon in the large folder B to invoke a service widget of an application, without expanding the large folder.**

S2309b: The electronic device 100 detects a user operation 8 of swiping up at the icon of the application 1 in the large folder B by the user.

S2310b: In response to the user operation 8, the electronic device 100 displays a service widget 1 of the application 1.

Optionally, in a possible implementation, the user may further directly swipe up at an application icon in the large folder B to invoke a service widget of an application, without expanding the large folder B. Specifically, the electronic device 100 may detect the user operation 8 of swiping up at the icon of the application 1 in the large folder B by the user. In response to the user operation 8, the electronic device 100 may display the service widget 1 of the application 1. For example, the large folder B is the large folder 1 shown in FIG. 18, and the icon of the application 1 may be the contacts application icon 311F in the large folder 1. The user may swipe up at the contacts application icon 311F in the large folder 1, and in response to the user operation, the electronic device 100 may display the service widget 803 shown in FIG. 19.

**Operation manner 4: in step S2307c and step S2308c, directly long press an application icon in the large folder B and move the application icon out of the large folder, without expanding the large folder.**

S2307c: The electronic device 100 detects a user operation 7 of long pressing the icon of the application 2 in the large folder B and dragging the icon of the application 2 out of the large folder B by the user.

S2308c: In response to the user operation 7, the electronic device 100 displays the icon of the application 2 in an area 1 on the desktop, where the area 1 is an area outside the large folder B on the desktop.

Optionally, in a possible implementation, the user may further directly long press an application icon in the large folder B and move the application icon out of the large folder, without expanding the large folder B. The electronic device 100 may detect the user operation 7 of long pressing the icon of the application 2 in the large folder B and dragging the icon of the application 2 out of the large folder by the user. In response to the user operation 7, the electronic device 100 may display the icon of the application 2 in the area 1 on the desktop, where the area 1 is the area outside the large folder B on the desktop. As shown in FIG. 20, examples in which the large folder B is the large folder B shown in FIG. 20, and the icon of the application 2 is the contacts application icon 311F in the large folder 1 are used. The user may long press the contacts application icon 311F, and drag the contacts application icon 311F out of the large folder 1. In response to the user operation, the electronic device 100 may display the contacts application icon 311F in the dock area 313, and no longer display the contacts application icon 311F in the large folder 1.

Further, in a possible implementation, when the large folder B includes only two application icons, for example, the icon of the application 1 and the icon of the application 2, after the electronic device 100 drags the icon of the application 2 out of the large folder B, the electronic device 100 may not display the large folder B, but directly display the icon of the application 1 on the desktop.

It may be understood that neither the icon of the application 1 nor the icon of the application 2 is in a grid at a lower right corner (for example, the grid 3-3 shown in FIG. 4) in the large folder B. In this way, the user may implement a function for the large folder by performing an operation on the grid at the lower right corner. For example, the user can tap the grid at the lower right corner to expand the large folder. The user can further long press the grid at the lower right corner to display the shortcut menu of the large folder. The user may further long press the grid at the lower right corner and drag to move the position of the large folder on the desktop.

It may be understood that an execution sequence of the foregoing four operation manners is not limited in this embodiment of this application. When there are more than two application icons in the large folder B, the electronic device 100 may first perform any one of step S2307a to step S2310a, step S2307b and step S2308b, step S2309b and step S2310b, and step S2307c and step S2308c. For example, the electronic device 100 may first perform step S2309b and step S2310b, then perform step S2307b and step S2308b, and then perform step S2307a to step S2310a, and finally, the electronic device 100 performs step S2307c and step S2308c. An execution sequence of step S2307a to step S2310a, step S2307b and step S2308b, step S2309b and step S2310b, and step S2307c and step S2308c is not limited in this embodiment of this application. When there are only two application icons in the large folder B, after the electronic device 100 moves either of the application icons in the large folder B out of the large folder B according to step S2307c and step S2308c, the electronic device 100 no longer displays the large folder B. In this case, the electronic device 100 may no longer perform step S2307a to step S2310a, step S2307b and step S2308b, and step S2309b and step S2310b. However, if the electronic device 100 has another large folder, the user may perform an operation on an application icon in the another large folder according to any one of operation manners in step S2307a to step S2310a, step S2307b and step S2308b, step S2309b and step S2310b, and step S2307c and step S2308c.

According to the folder interaction method provided in this embodiment of this application, the user can directly long press an icon of a target application in a large folder to invoke a corresponding application shortcut menu, without expanding the large folder. In addition, the user may also directly long press the icon of the target application in the large folder to move a position of the icon of the target application in the large folder or drag the icon of the target application out of the large folder, without expanding the large folder. In addition, the user may also directly swipe up at the icon of the target application in the large folder to invoke a corresponding service widget, without expanding the large folder. In this way, user operations are simpler and faster, thereby enhancing user experience.

It may be understood that the folder interaction method provided in this embodiment of this application may be further applied to a foldable device. When the foldable device is in an unfolded state, because a display in the unfolded state is larger than a display in a folded state, when the user directly drags an application icon from a large folder that is not expanded, an area in which the application icon may be placed on the display is larger. In other words, the user can drag in a larger range, so that interaction experience of the user is more obvious.

In this embodiment of this application, the first application, the second application, and the third application may be any application displayed on the user desktop, for example, the first application, the second application, and the third application may be any application icon shown in the large folder 1 shown in FIG. 3. The fourth application may be an application configured with a service widget. For example, the fourth application may be any one of the gallery application, the music application, the contacts application, and the like shown in FIG. 3.

An embodiment of this application further provides a chip system, including a processor. The processor is coupled to a memory, and the memory is configured to store a program or instructions. When the program or the instructions are executed by the processor, the chip system is enabled to implement the method according to any one of the foregoing method embodiments.

In some examples, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

In some examples, there may be also one or more memories in the chip system. The memory may be integrated with the processor, or may be disposed separately from the processor. This is not limited in this embodiment of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this embodiment of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by using a hardware integrated logic circuit in the processor, or by using instructions in a form of software. The steps of the method disclosed with reference to embodiments of this application may be directly performed by a hardware processor, or may be performed by using a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the folder interaction method in the foregoing embodiments.

An embodiment of this application further provides a computer program product. When the computer program product is run on a computer, the computer is enabled to perform the foregoing related steps, to implement the folder interaction method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the folder interaction method in the foregoing method embodiments.

The apparatus, the computer-readable storage medium, the computer program product, or the chip provided in embodiments of this application is configured to perform the corresponding method provided above. Therefore, for beneficial effects that can be achieved, refer to the beneficial effects in the corresponding method provided above. Details are not described herein again.

Methods or algorithm steps described in combination with the content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof. These modifications or replacements do not make the essence of the corresponding technical solutions depart from the scope of the technical solutions of embodiments of this application.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on the computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the procedures of the methods in embodiments may be implemented by a computer program instructing related hardware. The program may be stored in a computer-readable storage medium. The program, when executed, may include the procedures of the foregoing method embodiments. The foregoing storage medium includes any medium that can store program code, such as a ROM, a random access memory RAM, a magnetic disk, or an optical disc.

## Claims

1. A folder interaction method, comprising:
displaying, by an electronic device, a desktop, wherein the desktop comprises a large folder, the large folder comprises an icon of a first application and an icon of a second application, the desktop further comprises an icon of a third application, and the large folder does not comprise the icon of the third application;
receiving, by the electronic device, a first operation performed by a user on the desktop; and
in response to the first operation, moving, by the electronic device, the icon of the first application from a first position to a second position.

2. The method according to claim 1, wherein the first position and the second position are positions in the large folder, and the first position and the second position are different; or
the first position is a position in the large folder, and the second position is outside the large folder and is a position on the desktop; and
after the icon of the first application is moved from the first position to the second position, the icon of the first application is no longer displayed in the large folder.

3. The method according to claim 2, wherein the first operation is an operation of long pressing the icon of the first application and moving the icon of the first application in the large folder; or the first operation is an operation of long pressing the icon of the first application and moving the icon of the first application out of the large folder.

4. The method according to claim 3, wherein when the large folder comprises only the icon of the first application and the icon of the second application, the second position is outside the large folder and is the position on the desktop, and after moving, by the electronic device, the icon of the first application from the first position to the second position, the method further comprises:
no longer displaying, by the electronic device, the large folder, and displaying the icon of the second application at a third position on the desktop.

5. The method according to claim 3, wherein the large folder further comprises an icon of a fourth application, and the method further comprises:
when the electronic device displays the desktop, detecting, by the electronic device, a second operation performed by the user on the icon of the second application in the large folder; and in response to the second operation, displaying, by the electronic device, a shortcut menu of the second application, wherein the shortcut menu of the second application comprises one or more function options provided by the second application.

6. The method according to claim 5, wherein the second operation is an operation of long pressing the icon of the second application.

7. The method according to claim 6, wherein after detecting, by the electronic device, the second operation performed by the user on the desktop, the method further comprises:
in response to the second operation, further displaying, by the electronic device, a shortcut menu of the large folder, wherein the shortcut menu of the large folder comprises one or more function options for the large folder.

8. The method according to claim 7, further comprising:
when the electronic device displays the desktop, detecting, by the electronic device, a third operation performed on the icon of the fourth application in the large folder; and
displaying, by the electronic device, a service widget of the fourth application in response to the third operation.

9. The method according to claim 8, wherein the third operation is an operation of long pressing the icon of the fourth application and swiping up.

10. The method according to claim 9, wherein displaying, by the electronic device, the service widget of the fourth application specifically comprises:
displaying, by the electronic device, the service widget of the fourth application above the large folder in an overlay manner.

11. The method according to any one of claims 1 to 10, wherein before displaying, by the electronic device, the large folder on the desktop, the method further comprises:
displaying, by the electronic device, a small folder, wherein the small folder comprises the icon of the first application and the icon of the second application; and
receiving a fourth operation of displaying the small folder as a large folder by the user; and in response to the fourth operation, displaying, by the electronic device, the large folder, wherein the large folder comprises the icon of the first application and the icon of the second application, a size of the icon of the first application in the large folder is greater than a size of the icon of the first application in the small folder, and a size of the icon of the second application in the large folder is greater than a size of the icon of the second application in the small folder.

12. The method according to claim 11, wherein after displaying, by the electronic device, the large folder on the desktop, the method further comprises:
detecting, by the electronic device, a fifth operation performed on the icon of the third application; and
displaying, by the electronic device, the icon of the third application in the large folder in response to the fifth operation.

13. An electronic device, comprising a display, one or more processors, and one or more memories, wherein the display and the one or more memories are coupled to the one or more processors, the one or more memories are configured to store computer program code, the computer program code comprises computer instructions, and when the one or more processors execute the computer instructions, the method according to any one of claims 1 to 12 is performed.

14. A chip system, wherein the chip system is used in an electronic device, the chip system comprises one or more processors, and the processor is configured to invoke computer instructions, so that the method according to any one of claims 1 to 12 is performed.

15. A computer-readable storage medium, comprising instructions, wherein when the instructions are run on an electronic device, the method according to any one of claims 1 to 12 is performed.

16. A computer program product, comprising a computer program/instructions, wherein when the computer program/the instructions are run on an electronic device, the electronic device is enabled to perform the method according to any one of claims 1 to 12.
